# EUROPEAN PATENT SPECIFICATION

(11) **EP 1 454 958 B1**
(45) Date of publication and mention of the grant of the patent: **04.10.2006**
(21) Application number: 02780080.4
(22) Date of filing: 14.11.2002
(51) Int. Cl.: C08L 67/04, C08J 5/00, C08K 5/10, C08K 5/20, C08K 5/521

(54) **LACTIC ACID POLYMER COMPOSITION AND MOLDED OBJECT THEREOF**
MILCHSÄUREPOLYMERZUSAMMENSETZUNG UND FORMKÖRPER DARAUS
COMPOSITION A BASE DE POLYMERE D'ACIDE LACTIQUE ET OBJET MOULE ASSOCIE

(30) Priority: 15.11.2001 JP 2001350020; 30.09.2002 JP 2002286386
(43) Date of publication of application: 08.09.2004
(73) Proprietor: NEW JAPAN CHEMICAL CO.,LTD., Kyoto-shi Kyoto 612-8224 (JP); KURARAY CO., LTD., Okayama 710-8622 (JP)
(72) Inventor: YOSIMURA, Masahumi, Kuse-gun, Kyoto 613-0034 (JP); KAMOGAWA, Toshiyuki, Toyonaka-shi, Osaka 560-0085 (JP); HATTORI, Kazuhiro, Kyoto-shi, Kyoto 607-8142 (JP); IDA, Yukihiro, Kyoto-shi, Kyoto 615-8294 (JP)
(74) Representative: Barz, Peter
(86) International application number: PCT/JP2002/011859
(87) International publication number: WO 2003/042302

(56) References cited:
- EP-A- 0 780 428
- JP-A- 10 087 975

## Description

### TECHNICAL FIELD

The present invention relates to a lactic acid-based polymer composition comprising a lactic acid-based polymer, and a lactic acid-based polymer molded article produced by molding such a lactic acid-based polymer composition.

### BACKGROUND OF THE INVENTION

In recent years, methods for disposing of polyethylene, polypropylene, polystyrene, polyvinyl chloride, and like commonly used plastics which are not decomposed in the natural environment, has become an issue in view of environmental protection. Most of these commonly used plastics are disposed of by incineration or landfilling without reuse or recycling. However, polyethylene, polypropylene, and polystyrene have high heats of combustion, and when these commonly used plastics are incinerated, they are likely to damage incinerators. Moreover, it is known that incineration of polyvinyl chloride generates toxic gases such as dioxins and the like. When landfilled, these commonly used plastics are chemically stable and remain almost permanently, escalating landfill shortage problem.

To solve these problems, biodegradable polymers and articles molded therefrom that decompose in the natural environment are in demand. Accordingly, research efforts have been actively made to develop naturally decomposable aliphatic polyester resins, such as copolymers of 3-hydroxybutyric acid and 3-hydroxyvaleric acid, polycaprolactone, polybutylene succinate, and the like. Polylactic acid and the copolymers thereof are one example of these resins. Lactic acid-based polymers are biodegradable and have a low heat of combustion which is 1/3 to 1/2 times that of polyethylene and polypropylene, and do not cause damage to incinerators. Furthermore, when incinerated, lactic acid-based polymers do not generate toxic gases such as hydrogen chloride, NOₓ, SOₓ, and especially dioxins. Moreover, lactic acid-based polymers are expected to be materials capable of substituting commonly used plastics because lactic acid-based polymers can be produced from vegetable starting material resources (cornstarch, etc.) that are annually renewable, thereby eliminating the use of petroleum or like fossil resources.

Meanwhile, with the rapid technical development in the field of electronics, mechatronics, optoelectronics, laser, liquid crystal, optics, office automation, factory automation, etc., the demand for transparent films has increased rapidly and their applications have also been broadening rapidly. Examples of specific applications of transparent films include overhead projector films, platemaking films, tracing films, food-wrapping films, agricultural films, transparent electroconductive films (e.g., for touch screen panels for computer input, etc.), heat reflecting films, liquid crystal display films, liquid crystal display polarizing films, printed circuit boards, etc.

Although glass, acrylic (for example, polymethylmethacrylate), polycarbonate, and like rigid films of poor flexibility have heretofore been used for these applications, they are recently being rapidly replaced by transparent films having high flexibility, moldability, heat resistance, and like properties. Polyethylene terephthalate (PET) films can be used as an alternative for these films. However, PET poses a problem in applications in which biodegradability or decomposability in the natural environment is required. Therefore, in view of the background described above, it is predicted that the impact of films with transparency, heat resistance (crystallinity) and decomposability will be significant in the technical field of transparent films.

Molded articles made from lactic acid-based polymers, which are degradable thermoplastic polymers, such as polylactic acid, or copolymers of lactic acid and one or more compounds having 2 or more functional groups that can form an ester linkage (e.g., aliphatic hydroxycarboxylic acids, lactones, and the like) are usually amorphous immediately after molding, and transparent because they do not contain crystals that have a size similar to or larger than the wavelength of light and thereby cause light scattering. However, molded articles obtainable from such lactic acid-based polymers usually have low heat resistance due to their amorphous nature. Therefore, amorphous polylactic acid containers, for example, are superior in transparency but inferior in heat resistance, and thereby cannot be brought into contact with hot water or cannot be used in applications in which they are to be heated by microwave ovens, and their applications have been limited.

To improve the heat resistance, lactic acid-based polymer molded articles are subjected to heat treatments in which during the molding process they are kept for a long period of time in a mold maintained at a temperature in the vicinity of their crystallization temperatures, or amorphous molded articles right after molding are annealed. However, as the crystallization progresses, crystals (e.g., spherulites) having a size similar to or larger than the wavelength of light that cause light scattering rapidly grow to give crystals having a size exceeding the wavelength of visible light, with the result that the resulting become molded articles opaque.

In the technical field of lactic acid-based polymers, techniques are disclosed in which an additive or a nucleating agent that will be described below is added in order to inhibit the spherulite growth and to thereby give transparency, or in order to enhance crystallization rate to thereby increase crystallinity. However, their effect is not necessarily sufficient from the industrial point of view.
1) It is disclosed that aliphatic polyester molded articles having both transparency and crystallinity are produced by adding an aliphatic carboxylic amide with a melting point of 40-300°C in an amount of 0.1-10 parts by weight to an aliphatic polyester such as polylactic acid. Although this technique is characterized in that heat treatment is conducted during or after molding to increase crystallinity under ordinary molding conditions, the working examples only disclose that heat treatment is conducted after molding. This method is not necessarily an industrially advantageous method because such a heat treatment step is required after molding, and molded articles are grossly deformed as crystallization progresses during the heat treatment (Japanese Unexamined Patent Publication No. 278991-1997).
2) A technique is disclosed in which an amide compound having a specific structure is added to a polylactic acid resin to increase the crystallinity of the polylactic acid resin to thereby improve mold releasability. Although the working examples demonstrate the improvement of mold releasability, simultaneous presence of transparency and crystallinity are not discussed (Japanese Unexamined Patent Publication No. 87975-1998).

In view of these techniques disclosed in the above references, it is currently industrially difficult to simultaneously impart transparency and crystallinity to lactic acid-based polymer molded articles.

### DISCLOSURE OF THE INVENTION

An object of the present invention is to provide a lactic acid-based polymer composition capable of producing a molded article having transparency and crystallinity (heat resistance), and a molded article produced by molding such a lactic acid-based polymer composition.

The inventors conducted extensive research to accomplish the above object and found the following:
1) During (or after) molding a lactic acid-based polymer composition produced by adding a specific amide compound and a specific ester plasticizer to a lactic acid-based polymer, if a step of crystallizing the lactic acid-based polymer is carried out, the amide compound and the ester plasticizer function synergistically, thereby producing an article having transparency and crystallinity (heat resistance).
2) The molding cycle can be shortened by increasing the crystallization rate in the crystallization step mentioned above.

The present invention was accomplished by conducting further research based on these findings.

Item 1. A lactic acid-based polymer composition comprising:
(i) at least one amide compound represented by General Formula (1):

   R¹(̵CONHR²)ₐ (1)

   wherein R¹ represents a C₂₋₃₀, particularly C₄₋₁₀, saturated or unsaturated aliphatic polycarboxylic acid residue, a C₄₋₂₈, particularly C₅₋₁₀, saturated or unsaturated alicyclic polycarboxylic acid residue, or a C₆₋₂₈, particularly C₆₋₁₂, aromatic polycarboxylic acid residue;
   R² represents C₁₋₁₈, particularly C₄₋₁₀, alkyl, C₂₋₁₈, particularly C₄₋₁₀, alkenyl, C₃₋₁₂, particularly C₅₋₈, cycloalkyl or cycloalkenyl, phenyl, naphthyl, anthryl, or a group represented by General Formula (a), General Formula (b), General Formula (c), or General Formula (d): 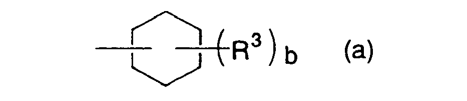 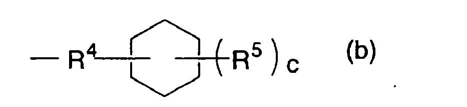 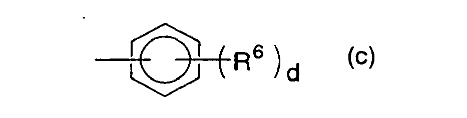 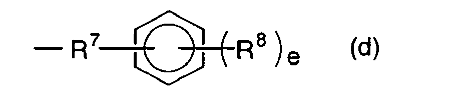 wherein R³ is C₁₋₁₈, particularly C₁₋₄, alkyl, C₂₋₁₈, particularly C₄₋₁₀, alkenyl, C₁₋₁₈, particularly C₁₋₄, alkoxy, C₃₋₁₈, particularly C₅₋₁₂, cycloalkyl, phenyl, or halogen; R⁴ represents C₁₋₄ linear or branched alkylene; R⁵ and R⁶ have the same meaning as R³; R⁷ has the same meaning as R⁴; and R⁸ has the same meaning as R³;
   a is an integer of 2 to 6, particularly 2 to 4; b is an integer of 1 to 5, particularly 1 to 3; c is an integer 0 to 5, particularly 0 to 3; d is an integer of 1 to 5, particularly 1 to 3; and e is an integer of 0 to 5, particularly 0 to 3;
(ii) at least one ester plasticizer; and
(iii) a lactic acid-based polymer.

Item 2. A lactic acid-based polymer composition according to Item 1, wherein R¹ is 1,4-cyclohexanedicarboxylic acid residue, 2,6-naphthalenedicarboxylic acid residue, trimesic acid residue or 1,2,3,4-butanetetracarboxylic acid residue.

Item 3. A lactic acid-based polymer composition according to Item 1, wherein R¹ is trimesic acid residue.

Item 4. A lactic acid-based polymer composition according to Item 1, wherein R¹ is 1,4-cyclohexanedicarboxylic acid residue, 2,6-naphthalenedicarboxylic acid residue, trimesic acid residue or 1,2,3,4-butanetetracarboxylic acid residue; and R² is tert-butyl, cyclohexyl, phenyl, 2-methylcyclohexyl, 4-methylcyclohexyl or benzyl.

Item 5. A lactic acid-based polymer composition according to Item 4, wherein the amide compound is at least one member selected from the group consisting of trimesic acid tricyclohexylamide, trimesic acid tri(2-methylcyclohexylamide), trimesic acid tri(4-methylcyclohexylamide), 1,4-cyclohexane dicarboxylic acid dicyclohexylamide, 1,4-cyclohexane dicarboxylic acid di(2-methylcyclohexylamide), 1,4-cyclohexane dicarboxylic acid dibenzylamide, 2,6-naphthalenedicarboxylic acid dicyclohexylamide, 1,2,3,4-butanetetracarboxylic acid tetracyclohexylamide and 1,2,3,4-butanetetracarboxylic acid tetraanilide.

Item 6. A lactic acid-based polymer composition according to any one of Items 1-5, wherein the ester plasticizer is at least one member selected from the group consisting of polyhydric alcohol derivatives, hydroxycarboxylic acid derivatives, aliphatic or aromatic carboxylic acid esters, polyether polyol derivatives and phosphoric acid derivatives.

Item 7. A lactic acid-based polymer composition according to Item 6, wherein the ester plasticizer is at least one member selected from the group consisting of glycerol derivatives, citric acid derivatives and polyalkyleneglycol derivatives.

Item 8. A lactic acid-based polymer composition according to Item 7, wherein the glycerol derivative is at least one glycerol aliphatic acid triester (aliphatic acid : C₂₋₁₈).

Item 9. A lactic acid-based polymer composition according to Item 7, wherein the citric acid derivative is at least one member selected from the group consisting of acetylcitric acid trialkyl esters (alkyl: C₁₋₁₈) and citric acid trialkyl esters (alkyl: C₁₋₁₈).

Item 10. A lactic acid-based polymer composition according to Item 7, wherein the polyalkyleneglycol derivatives are at least one member selected from the group consisting of diethylene glycol di-aliphatic carboxylic acid esters (aliphatic carboxylic acid: C₂₋₁₈), triethylene glycol di-aliphatic carboxylic acid esters (aliphatic carboxylic acid:
C₂₋₁₈), tetraethylene glycol di-aliphatic carboxylic acid esters (aliphatic carboxylic acid: C₂₋₁₈), polyethylene glycol di-aliphatic carboxylic acid esters (aliphatic carboxylic acid: C₂₋₁₈), diethylene glycol di-aromatic carboxylic acid esters, triethylene glycol di-aromatic carboxylic acid esters, tetraethylene glycol di-aromatic carboxylic acid esters, polyethylene glycol di-aromatic carboxylic acid esters, dipropylene glycol di-aliphatic carboxylic acid esters (aliphatic carboxylic acid: C₂₋₁₈), tripropylene glycol di-aliphatic carboxylic acid esters (aliphatic carboxylic acid: C₂₋₁₈), tetrapropylene glycol di-aliphatic carboxylic acid esters (aliphatic carboxylic acid: C₂₋₁₈), polypropylene glycol di-aliphatic carboxylic acid esters (aliphatic carboxylic acid: C₂₋₁₈), dipropylene glycol di-aromatic carboxylic acid esters, tripropylene glycol di-aromatic carboxylic acid esters, tetrapropylene glycol di-aromatic carboxylic acid esters, and polypropylene glycol di-aromatic carboxylic acid esters.

Item 11. A lactic acid-based polymer composition according to any one of Items 1-10, wherein the lactic acid-based polymer has a weight average molecular weight of 50000 or more.

Item 12. A lactic acid-based polymer composition according to any one of Items 1-11 which comprises 0.01-10 parts by weight of the amide compound and 1-300 parts by weight of the ester plasticizer, based on 100 parts by weight of the lactic acid-based polymer.

Item 13. A molded article produced by molding the lactic acid-based polymer composition according to any one of Items 1-12.

Item 14. A lactic acid-based polymer molded article comprising the lactic acid-based polymer composition according to any one of Items 1-12, the molded article having a degree of crystallization of 30% or more and a transparency such that it has a haze value of 70% or less at a thickness of 0.5 mm.

Item 15. A method for producing the lactic acid-based polymer molded article according to Item 14, the method comprising:
(1) introducing a melt of the lactic acid-based polymer composition in the form of pellets into a mold and crystallizing the melt in the mold; or
(2) extruding a melt of the lactic acid-based polymer composition in the form of pellets from a T-die extruder and crystallizing the melt by a chill roll;
the melt being crystallized at a temperature within the range from Tc to Tg, wherein Tc is the crystallization onset temperature of the lactic acid-based polymer composition and Tg is the glass transition temperature of the lactic acid-based polymer composition, as measured by differential scanning calorimetry.

Hereinbelow, the present invention is described in more detail.

### Amide Compounds

The amide compounds of the present invention represented by General Formula (1) can be readily prepared by amidating according to conventional methods (for example, a method disclosed in Japan Unexamined Patent Publicaton No. 309821-1995) an aliphatic, alicyclic or aromatic polycarboxylic acid represented by General Formula (1a):

R⁹(̵COOH)_{f} (1a)

wherein R⁹ has the same meaning as R¹ described above and f has the same meaning as a above, or an anhydride, alkyl ester (especially C₁₋₄ alkyl ester) or chloride thereof with at least one aliphatic, alicyclic or aromatic monoamine represented by General Formula (1b):

R¹⁰-NH₂ (1b)

wherein R¹⁰ has the same meaning as R² described above.

Therefore, the "polycarboxylic acid residue" represented by R¹ in General Formula (1) is a residue obtained by removing all the carboxyl groups from an aliphatic, alicyclic or aromatic polycarboxylic acid represented by General Formula (1a) and exemplified below. The number of carbon atoms of R¹ refers to the number of carbon atoms possessed by the "polycarboxylic acid residue" (R⁹ = R¹) obtained by removing the carboxyl groups. R² of General Formula (1) is a residue obtained by removing the amino group from an aliphatic, alicyclic or aromatic monoamine represented by General Formula (1b) and exemplified below.

Examples of the aliphatic polycarboxylic acids are aliphatic carboxylic acids represented by General Formula (1a) wherein R⁹ has 2 to 30, particularly 4-10, carbon atoms and having 2 to 6 (particularly 2-4) carboxyl groups. Examples include diphenylmalonic acid, succinic acid, phenylsuccinic acid, diphenylsuccinic acid, glutaric acid, 3,3-dimethylglutaric acid, adipic acid, pimelic acid, suberic acid, azelaic acid, sebacic acid, 1,12-dodecanedioic acid, 1,14-tetradecanedioic acid, 1,18-octadecanedioic acid, citric acid, methanetricarboxylic acid, tricarballylic acid, propenetricarboxylic acid, pentanetricarboxylic acid, ethanetetracarboxylic acid, propanetetracarboxylic acid, pentanetetracarboxylic acid, butanetetracarboxylic acid (particularly, 1,2,3,4-butanetetracarboxylic acid.), dodecanetetracarboxylic acid, pentanepentacarboxylic acid, tetradecanehexacarboxylic acid, ethylenediaminetetraacetic acid, nitrilotriacetic acid, ethylene glycol bis(β-aminoethyl ether)N,N,N',N'-tetraacetic acid, diethylenetriaminepentaacetic acid, N-hydroxyethylethylenediamine-N,N',N'-triacetic acid, 1,3-diaminopropane-2-ol-N,N,N',N'-tetraacetic acid, 1,2-diaminopropane-N,N,N',N'-tetraacetic acid, triethylenetetraminehexaacetic acid, nitrilotripropionic acid, 1,6-hexanediaminetetraacetic acid, N-(2-carboxyethyl)iminodiacetic acid, etc.

Examples of the alicyclic polycarboxylic acids are those represented by General Formula (1a) wherein R⁹ has 4-28, particularly 5-10, carbon atoms and having 2-6 (particularly 2-4) carboxyl groups. Examples include 1,2-cyclohexanedicarboxylic acid, 1,4-cyclohexanedicarboxylic acid, 1,4-cyclohexanediacetic acid, 1,5-decalindicarboxylic acid, 2,6-decalindicarboxylic acid, 4,4'-bicyclohexanedicarboxylic acid, cyclohexanetricarboxylic acid, cyclobutanetetracarboxylic acid, cyclopentanetetracarboxylic acid, cyclohexanetetracarboxylic acid, tetrahydrofurantetracarboxylic acid, 5-(succinic acid)-3-methyl-3-cyclohexene-1,2-dicarboxylic acid, bicyclo[2.2.2]octa-7-ene-2,3,5,6-tetracarboxylic acid, cyclohexanehexacarboxylic acid, 5,6,9,10-tetracarboxytricyclo[6.2.2.0^{2,7}]dodeca-2,11-diene and lower-alkyl substitution products thereof (for example, those substituted with methyl at the 3, 8, 11, or 12 position), 1,2-cyclohexanediaminetetraacetic acid, 2,3,5-tricarboxycyclopentylacetic acid, 6-methyl-4-cyclohexene-1,2,3-tricarboxylic acid, 3,5,6-tricarboxynorbornane-2-acetic acid, thiobis(norbornane-2,3-dicarboxylic acid), bicyclo[4.2.0]octane-3,4,7,8-tetracarboxylic acid, 1,1'-bicyclopropane-2,2',3,3'-tetracarboxylic acid, 1,2-bis(2,3-dimethyl-2,3-dicarboxycyclobutyl)ethane, pyrazine-2,3,5,6-tetracarboxylic acid, tricyclo[4.2.2.0^{2,5}]decane-9-ene-3,4,7,8-tetracarboxylic acid, 3,4-dicarboxy-1,2,3,4-tetrahydro-1-naphthalenesuccinic acid and lower-alkyl substitution products thereof (for example, those substituted with methyl at the 1, 5, 6, or 7 position), 2,3,4,5,6,7,12,13-octahydrophenanthrene-3,4,5,6-tetracarboxylic acid, etc.

Examples of the aromatic polycarboxylic acids are those represented by General Formula (1a) wherein R⁹ has 6 to 28, particularly 6-12, carbon atoms and having 2 to 6 (particularly 2-4) carboxyl groups. Specific examples include p-phenylenediacetic acid, p-phenylenediethanoic acid, phthalic acid, 4-tert-butylphthalic acid, isophthalic acid, 5-tert-butylisophthalic acid, terephthalic acid, 1,8-naphthalic acid, 1,4-naphthalenedicarboxylic acid, 2,6-naphthalenedicarboxylic acid, 2,7-naphthalenedicarboxylic acid, diphenic acid, 3,3'-biphenyldicarboxylic acid, 4,4'-biphenyldicarboxylic acid, 4,4'-binaphthyldicarboxylic acid, bis(3-carboxyphenyl)methane, bis(4-carboxyphenyl)methane, 2,2-bis(3-carboxyphenyl)propane, 2,2-bis(4-carboxyphenyl)propane, 3,3'-sulfonyldibenzoic acid, 4,4'-sulfonyldibenzoic acid, 3,3'-oxydibenzoic acid, 4,4'-oxydibenzoic acid, 3,3'-carbonyldibenzoic acid, 4,4'-carbonyldibenzoic acid, 3,3'-thiodibenzoic acid, 4,4'-thiodibenzoic acid, 4,4'-(p-phenylenedioxy)dibenzoic acid, 4,4'-isophthaloyldibenzoic acid, 4,4'-terephthaloyldibenzoic acid, dithiosalicylic acid, benzenetricarboxylic acid, benzenetetracarboxylic acid, benzophenonetetracarboxylic acid, biphenyltetracarboxylic acid, biphenylethertetracarboxylic acid, diphenylsulfonetetracarboxylic acid (particularly, 3,3',4,4'-diphenylsulfonetetracarboxylic acid), diphenylmethanetetracarboxylic acid, perylenetetracarboxylic acid, naphthalenetetracarboxylic acid, 4,4'-dinaphthalic acid, benzidine-3,3'-dicarboxyl-N,N'-tetraacetic acid, diphenylpropanetetracarboxylic acid, anthracenetetracarboxylic acid, phthalocyaninetetracarboxylic acid, ethylene glycol trimellitic acid diester, benzenehexacarboxylic acid, glyceroltrimellitic acid triester, etc.

Examples of the aliphatic monoamines include C₁₋₁₈, particularly C₄₋₁₀, saturated aliphatic monoamines, and C₂₋₁₈, particularly C₄₋₁₀, unsaturated aliphatic monoamines having a single carbon-carbon double bond, such as methylamine, ethylamine, propylamine, isopropylamine, n-butylamine, isobutylamine, sec-butylamine, tert-butylamine, n-amylamine, tert-amylamine, hexylamine, heptylamine, n-octylamine, 2-ethylhexylamine, tert-octylamine, nonylamine, decylamine, undecylamine, dodecylamine, tridecylamine, tetradecylamine, pentadecylamine, hexadecylamine, heptadecylamine, octadecylamine, octadecenylamine, allylamine, etc.

Examples of the alicyclic monoamines include C₃₋₁₂, preferably C₅₋₈, alicyclic monoamines such as cyclopropylamine, cyclobutylamine, cyclopentylamine, cyclohexylamine, cycloheptylamine, cyclooctylamine, cyclododecylamine, and the like, as well as compounds represented by General Formula (2) or (3): 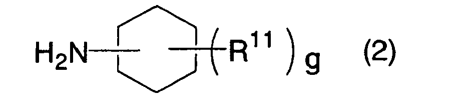 wherein R¹¹ is C₁₋₁₈ alkyl, C₂₋₁₈ alkenyl, C₁₋₁₈ alkoxyl, C₃₋₁₈ cycloalkyl, phenyl, or halogen, and g is an integer of 1 to 5; and 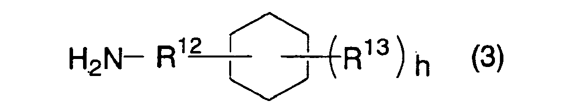 wherein R¹² is C₁₋₄ linear or branched alkylene, R¹³ has the same meaning as R¹¹ described above, and h is an integer of 0 to 5.

Specific examples of the alicyclic monoamines represented by General Formula (2) are methylcyclohexylamine, ethylcyclohexylamine, propylcyclohexylamine, isopropylcyclohexylamine, tert-butylcyclohexylamine, n-butylcyclohexylamine, isobutyl cyclohexylamine, sec-butylcyclohexylamine, n-amylcyclohexylamine, isoamylcyclohexylamine, sec-amylcyclohexylamine, tert-amylcyclohexylamine, hexylcyclohexylamine, heptylcyclohexylamine, octylcyclohexylamine, nonylcyclohexylamine, decylcyclohexylamine, undecylcyclohexylamine, dodecylcyclohexylamine, cyclohexylcyclohexylamine, phenylcyclohexylamine, dimethylcyclohexylamine, diethylcyclohexylamine, dipropylcyclohexylamine, diisopropylcyclohexylamine, di-n-butylcyclohexylamine, di-sec-butylcyclohexylamine, di-tert-butylcyclohexylamine, di-n-amylcyclohexylamine, di-tert-amylcyclohexylamine, dihexylcyclohexylamine, trimethylcyclohexylamine, triethylcyclohexylamine, tripropylcyclohexylamine, triisopropylcyclohexylamine, tri-n-butylcyclohexylamine, tri-sec-butylcyclohexylamine, tri-tert-butylcyclohexylamine, methoxycyclohexylamine, ethoxycyclohexylamine, dimethoxycyclohexylamine, diethoxycyclohexylamine, di-n-butoxycyclohexylamine, di-sec-butoxycyclohexylamine, di-tert-butoxycyclohexylamine, trimethoxycyclohexylamine, tri-n-butoxycyclohexylamine, chlorocyclohexylamine, dichlorocyclohexylamine, methylchlorocyclohexylamine, trichlorocyclohexylamine, bromocyclohexylamine, dibromocyclohexylamine, tribromocyclohexylamine, etc.

Specific examples of alicyclic monoamines represented by General Formula (3) are cyclohexylmethylamine, methylcyclohexylmethylamine, dimethylcyclohexylmethylamine, trimethylcyclohexylmethylamine, methoxycyclohexylmethylamine, ethoxycyclohexylmethylamine, dimethoxycyclohexylmethylamine, chlorocyclohexylmethylamine, dichlorocyclohexylmethylamine, α-cyclohexylethylamine, β-cyclohexylethylamine, methoxycyclohexylethylamine, dimethoxycyclohexylethylamine, chlorocyclohexylethylamine, dichlorocyclohexylethylamine, α-cyclohexylpropylamine, β-cyclohexylpropylamine, γ-cyclohexylpropylamine, methylcyclohexylpropylamine, etc.

Examples of the aromatic monoamines include aniline, 1-naphthylamine, 2-naphthylamine, 1-aminoanthracene, 2-aminoanthracene and the like, as well as compounds represented by General Formula (4) or (5): 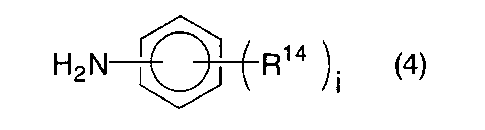 wherein R¹⁴ has the same meaning as R¹¹ described above and i is an integer of 1 to 5, and 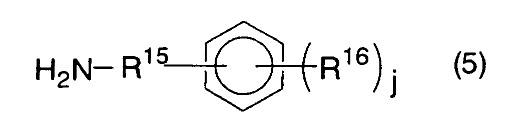 wherein R¹⁵ and R¹⁶ have the same meaning as R¹² and R¹¹, respectively, and j is an integer of 0 to 5.

Specific examples of the aromatic monoamines represented by General Formula (4) are toluidine, ethylaniline, propylaniline, cumidine, tert-butylaniline, n-butylaniline, isobutylaniline, sec-butylaniline, n-amylaniline, isoamylaniline, sec-amylaniline, tert-amylaniline, hexylaniline, heptylaniline, octylaniline, nonylaniline, decylaniline, undecylaniline, dodecylaniline, cyclohexylaniline, aminodiphenyl, aminostyrene, dimethylaniline, diethylaniline, dipropylaniline, diisopropylaniline, di-n-butylaniline, di-sec-butylaniline, di-tert-butylaniline, trimethylaniline, triethylaniline, tripropylaniline, tri-tert-butylaniline, anisidine, ethoxyaniline, dimethoxyaniline, diethoxyaniline, trimethoxyaniline, tri-n-butoxyaniline, chloroaniline, dichloroaniline, trichloroaniline, bromoaniline, dibromoaniline, tribromoaniline, etc.

Specific examples of aromatic monoamines represented by General Formula (5) are benzylamine, methylbenzylamine, dimethylbenzylamine, trimethylbenzylamine, methoxybenzylamine, ethoxybenzylamine, dimethoxybenzylamine, chlorobenzylamine, dichlorobenzylamine, α-phenylethylamine, β-phenylethylamine, methoxyphenylethylamine, dimethoxyphenylethylamine, chlorophenylethylamine, dichlorophenylethylamine, α-phenylpropylamine, β-phenylpropylamine, γ-phenylpropylamine, methylphenylpropylamine, etc.

Among the amide compounds described above, preferable are compounds of General Formula (1) wherein R¹ is 1,4-cyclohexanedicarboxylic acid residue, 2,6-naphthalenedicarboxylic acid residue, trimesic acid residue or 1,2,3,4-butanetetracarboxylic acid residue, particularly trimesic acid residue.

Among these, preferable are compounds of General Formula (1) wherein R¹ is 1,4-cyclohexanedicarboxylic acid residue, 2,6-naphthalenedicarboxylic acid residue, trimesic acid residue or 1,2,3,4-butanetetracarboxylic acid residue and R² is tert-butyl, cyclohexyl, phenyl, 2-methylcyclohexyl, 4-methylcyclohexyl or benzyl.

Among the amide compounds of the present invention represented by General Formula (1), particularly recommended are trimesic acid tricyclohexylamide, trimesic acid tri(2-methylcyclohexylamide), trimesic acid tri(4-methylcyclohexylamide), 1,4-cyclohexane dicarboxylic acid dicyclohexylamide, 1,4-cyclohexane dicarboxylic acid di(2-methylcyclohexylamide), 1,4-cyclohexane dicarboxylic acid dibenzylamide, 2,6-naphthalenedicarboxylic acid dicyclohexylamide, 1,2,3,4-butanetetracarboxylic acid tetracyclohexylamide, 1,2,3,4-butanetetracarboxylic acid tetraanilide and like compounds.

Although the particle diameter of the amide compounds usable in the invention is not limited insofar as the advantages of the invention are achieved, it is preferably as small as possible in view of the dissolution rate or dispersibility in a molten resin. The average particle diameter measured by laser diffraction and light scattering method is usually in the range of 0.1-500 µm, preferably 1-200 µm and more preferably 1-100 µm.

### Ester plasticizers

Ester plasticizers usable in the invention are not limited and include, for example, (1) polyhydric alcohol derivatives, (2) hydroxycarboxylic acid derivatives, (3) aliphatic or aromatic carboxylic acid esters, (4) polyether polyol derivatives, (5) phosphoric acid derivatives, etc. In particular, (1) polyhydric alcohol derivatives, (2) hydroxycarboxylic acid derivatives and (4) polyether polyol derivatives are preferable. These ester plasticizers can be used alone or in combination.

### <(1) Polyhydric Alcohol Derivatives>

Polyhydric alcohol derivatives are preferably glycerol derivatives.

Glycerol derivatives are preferably glycerol aliphatic acid (aliphatic acid: C₂₋₁₈) triesters. Specific examples include glycerol triacetate, glycerol tripropionate, glycerol tricaproate, glycerol tricaprylate, glycerol tri(2-ethylhexanoate), glycerol triisononanoate, glycerol triisostearate, etc.

### <(2) Hydroxycarboxylic Acid Derivatives>

Hydroxycarboxylic acid derivatives are preferably citric acid derivatives. Specifically, acetyl citric acid trialkyl (alkyl:C₁₋₁₈) esters and citric acid trialkyl (alkyl: C₁₋₁₈) esters are preferable. Typical examples, in the case of acetyl citric acid trialkyl (alkyl: C₁₋₁₈) esters, are triethyl acetyl citrate, triisopropyl acetyl citrate, tributyl acetyl citrate, tri(2-ethylhexyl) acetyl citrate, triisononyl acetyl citrate, triisostearyl acetyl citrate; triethyl citarte, triisopropyl citrate, tributyl citrate, tri(2-ethylhexyl)citrate, triisononyl citrate, triisostearyl citrate, etc.

### <(4) Polyether Polyol Derivatives>

Polyether polyol derivatives are preferably polyalkylene glycol derivatives. Examples of polyalkylene glycol derivatives include diesters of polyalkylene glycols and C₂₋₁₈, preferably C₆₋₁₀, aliphatic carboxylic acids or C₇₋₁₈, preferably C₇₋₁₄, aromatic carboxylic acids, etc.

Examples of the aromatic carboxylic acids are preferably benzoic acid that may contain one or two (particularly.one) substituents selected from the group consisting of C₁₋₄ alkyl, halogen, phenyl and hydroxyl. Unsubstituted benzoic acid is more preferable.

Examples of the aforementioned polyalkylene glycol include diethylene glycol, triethylene glycol, tetraethylene glycol, polyethylene glycol (number average molecular weight: 150-2000), dipropylene glycol, tripropylene glycol, tetrapropylene glycol, polypropylene glycol (number average molecular weight: 150-2000), etc.

Examples of esters include diethylene glycol di-aliphatic carboxylic acid (aliphatic carboxylic acid: C₂₋₁₈) esters, triethylene glycol di-aliphatic carboxylic acid (aliphatic carboxylic acid C₂₋₁₈) esters, tetraethylene glycol di-aliphatic carboxylic acid (aliphatic carboxylic acid: C₂₋₁₈) esters, polyethylene glycol (number average molecular weight: 150-2000) di-aliphatic carboxylic acid (aliphatic carboxylic acid: C_{2- 18}) esters, diethylene glycol di-aromatic carboxylic acid esters, triethylene glycol di-aromatic carboxylic acid esters, tetraethylene glycol di-aromatic carboxylic acid esters, polyethylene glycol (number average molecular weight: 150-2000) di-aromatic carboxylic acid esters, dipropylene glycol di-aliphatic carboxylic acid (aliphatic carboxylic acid: C₂₋₁₈) esters, tripropylene glycol di-aliphatic carboxylic acid (aliphatic carboxylic acid: C₂₋₁₈) esters, tetrapropylene glycol di-aliphatic carboxylic acid (aliphatic carboxylic acid: C₂₋₁₈) esters, polypropylene glycol (number average molecular weight: 150-2000) di-aliphatic carboxylic acid (aliphatic carboxylic acid: C₂₋₁₈) esters, dipropylene glycol di-aromatic carboxylic acid esters, tripropylene glycol di-aromatic carboxylic acid esters, tetrapropylene glycol di-aromatic carboxylic acid esters, polypropylene glycol (number average molecular weight: 150-2000) di-aromatic carboxylic acid esters, etc.

Specific examples of polyalkylene glycol derivatives include diethylene glycol diacetate, diethylene glycol dipropionate, diethylene glycol dicaproate, diethylene glycol dicaprylate, diethyleneglycol di(2-ethylhexanoate), diethylene glycol diisononanoate, diethylene glycol diisostearate, triethylene glycol diacetate, triethylene glycol dipropionate, triethylene glycol dicaproate, triethylene glycol dicaprylate, triethylene glycol di(2-ethylhexanoate), triethylene glycol diisononanoate, triethylene glycol diisostearate, tetraethylene glycol diacetate, tetraethylene glycol dipropionate, tetraethylene glycol dicaproate, tetraethylene glycol dicaprylate, tetraethylene glycol di(2-ethylhexanoate), tetraethylene glycol diisononanoate, tetraethylene glycol diisostearate, polyethylene glycol diacetate, polyethylene glycol dipropionate, polyethylene glycol dicaproate, polyethylene glycol dicaprylate, polyethylene glycol di(2-ethylhexanoate), polyethylene glycol diisononanoate, polyethylene glycol diisostearate, diethylene glycol dibenzoate, diethylene glycol ditoluate, diethylene glycol di(ethylbenzoate), diethylene glycol di(isopropylbenzoate), diethylene glycol di(t-butylbenzoate), diethylene glycol di(chlorobenzoate), diethylene glycol di(hydroxybenzoate), diethylene glycol di(phenylbenzoate), triethylene glycol dibenzoate, triethylene glycol ditoluate, triethylene glycol di(ethylbenzoate), triethylene glycol di(isopropylbenzoate), triethylene glycol di(t-butylbenzoate), triethylene glycol di(chlorobenzoate), triethylene glycol di(hydroxylbenzoate), triethylene glycol di(phenylbenzoate), tetraethylene glycol dibenzoate, tetraethylene glycol ditoluate, tetraethylene glycol di(ethylbenzoate), tetraethylene glycol di(isopropylbenzoate), tetraethylene glycol di(t-butylbenzoate), tetraethylene glycol di(chlorobenzoate), tetraethylene glycol di(hydroxylbenzoate), tetraethylene glycol di(phenylbenzoate), polyethylene glycol dibenzoate, polyethylene glycol ditoluate, polyethylene glycol di(ethylbenzoate), polyethylene glycol di(isopropylbenzoate), polyethylene glycol di(t-butylbenzoate), polyethylene glycol di(chlorobenzoate), polyethylene glycol di(hydroxylbenzoate), polyethylene glycol di(phenylbenzoate), dipropylene glycol diacetate, dipropylene glycol dipropionate, dipropylene glycol dicaproate, dipropylene glycol dicaprylate, dipropylene glycol di(2-ethylhexanoate), dipropylene glycol diisononanoate, dipropylene glycol diisostearate, tripropylene glycol diacetate, tripropylene glycol dipropionate, tripropylene glycol dicaproate, tripropylene glycol dicaprylate, tripropylene glycol di(2-ethylhexanoate), tripropylene glycol diisononanoate, tripropylene glycol diisostearate, tetrapropylene glycol diacetate, tetrapropylene glycol dipropionate, tetrapropylene glycol dicaproate, tetrapropylene glycol dicaprylate, tetrapropylene glycol di(2-ethylhexanoate), tetrapropylene glycol diisononanoate, tetrapropylene glycol diisostearate, polypropylene glycol diacetate, polypropylene glycol dipropionate, polypropylene glycol dicaproate, polypropylene glycol dicaprylate, polypropylene glycol di(2-ethylhexanoate), polypropylene glycol diisononanoate, polypropylene glycol diisostearate, dipropylene glycol dibenzoate, dipropylene glycol ditoluate, dipropylene glycol di(ethylbenzoate), dipropylene glycol di(isopropylbenzoate), dipropylene glycol di(t-butylbenzoate), dipropylene glycol di(chlorobenzoate), dipropylene glycol di(hydroxylbenzoate), dipropylene glycol di(phenylbenzoate), tripropylene glycol dibenzoate, tripropylene glycol ditoluate, tripropylene glycol di(ethylbenzoate), tripropylene glycol di(isopropylbenzoate), tripropylene glycol di(t-butyl benzoate), tripropylene glycol di(chlorobenzoate), tripropylene glycol di(hydroxybenzoate), tripropylene glycol di(phenylbenzoate), tetrapropylene glycol dibenzoate, tetrapropylene glycol ditoluate, tetrapropylene glycol di(ethylbenzoate), tetrapropylene glycol di(isopropylbenzoate), tetrapropylene glycol di(t-butylbenzoate), tetrapropylene glycol di(chlorobenzoate), tetrapropylene glycol di(hydroxybenzoate), tetrapropylene glycol di(phenylbenzoate), polypropylene glycol dibenzoate, polypropylene glycol ditoluate, polypropylene glycol di(ethylbenzoate), polypropylene glycol di(isopropylbenzoate), polypropylene glycol di(t-butylbenzoate), polypropylene glycol di(chlorobenzoate), polypropylene glycol di(hydroxybenzoate), polypropylene glycol di(phenylbenzoate), etc.

### <(3) Aliphatic or Aromatic Carboxylic Acid Esters>

Examples of aliphatic or aromatic carboxylic acid esters include butyl oleate, butyl isostearate and like monocarboxylic acid esters; di-2-ethylhexyl phthalate, diisononyl phthalate and like phthalic acid esters (monoesters and diesters), adipic acid esters (monoesters and diesters) such as, for example, isobutyl adipate, di-2-ethylhexyl adipate and the like; and such mono- and diesters produced using sebacic or azelaic acid instead of adipic acid.

### <(5) Phosphoric Acid Derivatives>

Examples of phosphoric acid derivatives include tri(C₁₋₁₂ alkyl) phosphates and tri(C₆₋₁₂ aryl) phosphates such as tributyl phosphate, tri-2-ethylhexyl phosphate, triphenyl phosphate, tricresyl phosphate, etc.

### Lactic acid-based polymers

Examples of lactic acid-based polymers, which are the main component according to the invention, include (a) lactic acid homopolymers; (b) lactic acid copolymers; (c) polymer blends prepared by blending at least one member selected from the group consisting of lactic acid homopolymers and lactic acid copolymers with other polymers; etc. While the starting materials for such lactic acid-based polymers, i.e., lactic acid components, are not limited, usable are L-lactic acid, D-lactic acid, DL-lactic acid or mixtures thereof, or lactic acid cyclic dimers such as L-lactide, D-lactide, meso-lactide or mixtures thereof.

Although the ratio of L-lactic acid to D-lactic acid (L/D) is not limited, lactic acid of high optical purity is preferable to obtain a high melting point. Specifically, it is preferable that the lactic acid contains L-lactic acid in an amount of 80 mol% or more, and particularly 95 mol% or more, relative to the total lactic acid. Also, it is preferable that the lactide contains L-lactide in an amount of 80 mol% or more, and particularly 95 mol% or more, relative to the total lactide. Among such lactic acid-based polymers, lactic acid homopolymers and lactic acid copolymers may have a weight average molecular weight that is not limited but can be suitably selected from a wide range. Usually, their weight average molecular weight is preferably 50000 or greater, more preferably 50000-500000, and more preferably 100000-500000.

### <Lactic Acid Homopolymers>

Examples of lactic acid homopolymers usable in the invention include polymers produced by subjecting L-lactic acid, D-lactic acid, DL-lactic acid, or mixtures thereof directly to dehydrative condensation, or subjecting cyclic dimers of lactic acid such as L-lactide, D-lactide, meso-lactide, or mixtures thereof to ring-opening polymerization.

### <Lactic Acid Copolymers>

Lactic acid copolymers are random or block copolymers of the aforementioned lactic acid monomers, lactides or lactic acid homopolymers, and other components copolymerizable therewith. In this case, although usable lactic acid homopolymers can be selected from a broad range to produce lactic acid copolymers, it is desirable to use those that have a weight average molecular weight of about 1000 to about 200000, and preferably about 5000 to about 100000.

Examples of the aforementioned other copolymerizable components are compounds having 2 or more ester-linkage-forming functional groups per molecule, such as (a) dicarboxylic acids, (b) polyhydric alcohols, (c) hydroxycarboxylic acids other than lactic acid, (d) lactones, and (e) polyesters, polyethers, polycarbonates, and the like that are made from components (a) to (d).

Specific examples of (a) dicarboxylic acids are C₄₋₅₀, particularly C₄₋₂₀, linear or branched saturated or unsaturated aliphatic dicarboxylic acids, C₈₋₂₀ aromatic dicarboxylic acids, and polyether dicarboxylic acids having a number average molecular weight of 2000 or less, and particularly 1000 or less. Preferable aliphatic dicarboxylic acids are succinic acid, adipic acid, sebacic acid, decanedicarboxylic acid and like C₄₋₂₀ linear aliphatic dicarboxylic acids. Preferable aromatic dicarboxylic acids are phthalic acid, terephthalic acid, isophthalic acid and the like.

Preferable as polyether dicarboxylic acids are those having a carboxymethyl group at both terminals of a polyalkylene ether such as polyethylene glycol, polypropylene glycol, polybutylene glycol, polyethylene polypropylene glycol, etc. Among these, preferable are polyether dicarboxylic acids having a number average molecular weight of 2000 or less, more preferably 1000 or less, and still more preferably 178-1000.

Examples of (b) polyhydric alcohols are aliphatic polyols, aromatic polyhydric alcohols, and polyalkylene ethers. Examples of aliphatic polyols are C₂₋₅₀, particularly C₂₋₂₀, aliphatic polyols having 2-4 hydroxyl groups, such as butanediol, hexanediol, octanediol, decanediol, 1,4-cyclohexanedimethanol, glycerol, sorbitan, trimethylolpropane, neopentyl glycol, etc.

Examples of aromatic polyhydric alcohols are C₆₋₂₀ aromatic diols, such as bis-(ortho, meta, or para)hydroxymethylbenzene, hydroquinone and the like, and aromatic diols having a number average molecular weight of 2000 or less, particularly less than 1000, and prepared by adding C₂₋₄ alkylene oxides, particularly ethylene oxide, propylene oxide or butylene oxide, to bisphenol A, bisphenol F or like bisphenols.

Examples of polyalkylene ethers are ether glycols having a number average molecular weight of 2000 or less, particularly 1000 or less, such as ethylene glycol, propylene glycol, diethylene glycol, triethylene glycol, polyethylene glycol, polypropylene glycol, etc.

Examples of (c) hydroxycarboxylic acids other than lactic acid are C₃₋₁₀ hydroxycarboxylic acids (provided that lactic acid is not included), such as glycolic acid, hydroxybutyric acid, 6-hydroxycaproic acid, etc.

Examples of (d) lactones include glycolide, ε-caprolactone glycolide, ε-caprolactone, β-propiolactone, δ-butyrolactone, β- or γ-butyrolactone, pivalolactone, δ-valerolactone, etc.

Examples of (e) polyesters, polyethers and polycarbonates are not limited insofar as they have been used heretofore in the production of lactic acid copolymers. It is recommended to use those that have a weight average molecular weight of 1000-150000, preferably 5000-100000.

Among the aforementioned polyesters, polyethers, and polycarbonates, those prepared by using a polyester as a comonomer are particularly preferable. Examples of polyesters usable as such comonomers are preferably aliphatic polyesters of aliphatic dicarboxylic acids (e-1) and aliphatic diols (e-2).

Preferable examples of aliphatic dicarboxylic acids (e-1) usable as a component for the aforementioned aliphatic polyesters are C₄₋₂₀ linear aliphatic dicarboxylic acids, such as succinic acid, adipic acid, sebacic acid, decanedicarboxylic acid, etc. Those having side chains and double bonds can also be used.

Examples of aliphatic diols (e-2) usable as the other component for the aforementioned aliphatic polyesters are C₂₋₂₀ aliphatic diols, such as ethylene glycol, propanediol, butanediol, hexanediol, octanediol, etc.; polyalkylene ethers (homopolymers and copolymers), such as polyethylene glycol, polypropylene glycol, polybutylene glycol, etc.; and polyalkylene carbonates. Polyalkylene ethers and polyalkylene carbonates having a number average molecular weight of 2000 or less, and particularly 1000 or less, are preferable.

In addition to such aliphatic dicarboxylic acids and aliphatic diols, hydroxycarboxylic acids such as lactic acid, glycolic acid, and hydroxybutyric acid; lactones such as butyrolactone and ε-caprolactone; aromatic dicarboxylic acids; and like compounds having functional group(s) that can form ester linkages can also be used as a secondary component of the aliphatic polyesters described above insofar as the effect of the invention is not impaired. Among the lactic acid copolymers described above, particularly preferable are copolymers of lactic acid and (c) hydroxycarboxylic acids (other than lactic acid); copolymers of lactic acid/diols/dicarboxylic acids (particularly, copolymers of aliphatic diols (e-2) and aliphatic dicarboxylic acids (e-1) described above; and copolymers of lactic acid and (d) lactones; and the like.

In the lactic acid copolymer used herein, the proportion of the aforementioned comonomer components (a) to (e) is preferably less than 50 wt.% of the total weight of the lactic acid-based polymer, which contains lactic acid as its main comomoner. If the proportion of comonomer components (a) to (e) is excessive, the crystallinity and heat resistance of the lactic acid-based polymer is impaired, and therefore the proportion of comonomer components can be suitably selected according to the purpose and application. It is recommended that the amount of the comonomer components is preferably 1-30 wt.%, and more preferably 5-20 wt.%, based on the total weight of the lactic acid-based polymer.

### <Polymer blends>

Polymer blends contain as the main ingredient at least one member selected from the group consisting of the aforementioned lactic acid homopolymers and lactic acid copolymers, and, as an additional polymeric ingredient, a polyester, such as an aliphatic polyester, aromatic polyester, or mixture thereof. As the additional polymeric ingredient, an aliphatic polyester is preferable in view of biodegradability.

Although the proportion of the additional polymeric ingredient contained can be suitably selected according to the purpose and application, it is preferable to contain polyester in a proportion of 5-50 wt.% relative to 95-50 wt.% of the at least one member selected from the group consisting of the lactic acid homopolymers and lactic acid copolymers described above. When the proportion of polyester is less than 5 wt.%, flexibility and impact resistance are unlikely to be attained. When it is more than 50 wt.%, mechanical properties are likely to be insufficient and transparency is unlikely to be attained. It is more preferable to contain polyester in a proportion of 6-40 wt.% relative to 94-60 wt.% of the at least one member selected from the group consisting of lactic acid homopolymers and lactic acid copolymers.

An excessively low molecular weight of polyester contained in the polymer blends results in insufficient mechanical properties and is thus not preferable. It is usually preferable to use polyester having a weight average molecular weight of 10000 or more, more preferably 30000 or more and still more preferably 50000 or more. Those having a weight average molecular weight of 50000-300000 are most commonly used.

Preferable examples of aliphatic dicarboxylic acids usable as a component of the aliphatic polyesters are C₄₋₂₀ linear aliphatic dicarboxylic acids such as succinic acid, adipic acid, sebacic acid, decanedicarboxylic acid and the like. Those that have side chains and/or double bonds can also be used.

Examples of aliphatic diols usable as the other component of the aliphatic polyesters are C₂₋₂₀ aliphatic diols such as ethylene glycol, propanediol, butanediol, hexanediol, octanediol, etc.; polyalkylene ethers (homopolymers and copolymers) such as polyethylene glycol, polypropylene glycol, polybutylene glycol, etc.; and polyalkylene carbonates. Polyalkylene ethers and polyalkylene carbonates having a number average molecular weight of 2000 or less, and particularly 1000 or less, are preferable.

In addition to such aliphatic dicarboxylic acids and aliphatic diols, hydroxycarboxylic acids such as lactic acid, glycolic acid, and hydroxybutyric acid; lactones such as butyrolactone and ε-caprolactone; aromatic dicarboxylic acids; and like compounds having functional group(s) that can form ester linkages can also be used as a secondary component of the aliphatic polyesters described above insofar as the effect of the invention is not impaired.

### <Methods for Producing Lactic acid-based polymers>

The lactic acid-based polymers, the main ingredient of the invention, can be produced according to conventional methods. Specifically, lactic acid homopolymers can be produced by subjecting a lactic acid monomer to direct dehydrative condensation, or subjecting a lactide, i.e., a cyclic dimer of lactic acid, to ring-opening polymerization (for example, Japanese Unexamined Patent Publication Nos. 33861-1995 and 96123-1984).

Methods for synthesizing, purifying, and polymerizing lactides are disclosed in the literature, such as U.S. Patent No. 4,057,537; European Patent Publication No. 261572; Polymer Bulletin, 14 (1985): 491-495; Makromol. Chem. 187 (1986): 1611-1628; etc.

When a copolymer of lactic acid and (c) hydroxycarboxylic acid or a copolymer of lactic acid and (d) lactone is used as the lactic acid-based polymer, examples of methods for producing such a copolymer include subjecting lactic acid and (c) hydroxycarboxylic acid to direct dehydrative polycondensation, or subjecting a cyclic dimer of lactic acid (lactide) and (d) lactone to ring opening polymerization optionally in the presence of an aliphatic metal salt such as tin dicaproate or the like as a catalyst (for example, Japanese Unexamined Patent Publication No. 306264-1994 and U.S. Patent No. 4,057,537).

When a lactic acid/diol/dicarboxylic acid copolymer is used as the lactic acid-based polymer, examples of methods for producing such a copolymer include reacting a cyclic dimer of lactic acid with a polyester polymer of the aliphatic dicarboxylic acid component (e-1) and the diol component (e-2) in any proportions in the presence of a ring-opening polymerization catalyst (e.g., Japanese Unexamined Patent Publication No. 173266-1995); reacting (i) a lactic acid homopolymer with (ii) a polyester of aliphatic dicarboxylic acid component (e-1) and aliphatic diol component (e-2) in the presence of an organic solvent (e.g., EP 0712880A2), and like methods.

Polymer blends usable in the invention can be produced by blending at least one member selected from the group consisting of the aforementioned lactic acid homopolymers and lactic acid copolymers with the aforementioned additional polymeric ingredient(s) according to conventional methods. Blending methods are not limited. For example, blending can be conducted by known methods such as mechanically stirring the polymers in the molten or solution state, or blending the polymers in the form of powders or particles and fusing or dissolving them. Specifically, the polymer blends described above can be produced using extruders, reactors, rolls, etc.

### Lactic acid-based polymer Compositions

The lactic acid-based polymer composition of the present invention contains the aforementioned amide compound, ester plasticizer, lactic acid-based polymer, and if desired other additives.

The amount of the amide compound to be added is 0.01-10 parts by weight, preferably 0.05-5 parts by weight, and more preferably 0.1-1 parts by weight, per 100 parts by weight of the lactic acid-based polymer. When it is less than 0.01 parts by weight, effectiveness as a clarifying nucleating agent tends to be insufficient. On the other hand, when the amount is greater than 10 parts by weight, part of the amide compound is left undissolved or coagulated in the molten resin, thereby impairing the transparency of the molded article. The amide compound can be used singly or in combination.

The amount of ester plasticizer to be contained is 1-300 parts by weight, preferably 1-100 parts by weight, and more preferably 1-50 parts by weight, per 100 parts by weight of the lactic acid-based polymer. When it is less than 1 part by weight, effectiveness as a crystallization enhancer tends to be insufficient. On the other hand, when it is more than 300 parts by weight, the plasticizer is likely to bleed out of the surface of the molded article produced, and the properties of the article deteriorate over time. Although the ester plasticizer to be contained in the lactic acid-based polymer is usually used singly, a mixture of two or more of them may be used if so desired.

Methods for blending the amide compound and ester plasticizer with the lactic acid-based polymer are not limited, and known kneading devices conventionally used in this technical field can be used. For example, using a Henschel mixer, ribbon blender, extruder, reactor, kneader, roll, etc., or a combination of these devices, each raw material may be blended in a solid form, and further mixed and kneaded with fusing. This mixing and kneading is usually conducted at 120-250°C, and preferably at 150-200°C. The lactic acid-based polymer composition of the invention is usually produced in the form of pellets.

Furthermore, to enhance various properties such as crystallization rate, heat resistance, mechanical properties, blocking resistance, etc., inorganic additives such as talc, kaolinite, SiO₂, clay, etc., can be added as necessary to the lactic acid-based polymer composition of the invention insofar as the transparency of the article produced is not impaired. For example, (i) in order to enhance blocking resistance, SiO₂ or the like having a particle diameter of 1-50 nm is preferable since it does not impair transparency; and (ii) in order to accelerate crystallization during molding, a crystalline inorganic substance containing an SiO₂ component in an amount of at least 10 wt.% can be used. Specific examples of such inorganic substances are Talc TM-30 (manufactured by Fuji Talc), Kaolin JP-100 (manufactured by Tsuchiya Kaolin), NN Kaolin Clay (manufactured by Tsuchiya Kaolin), Kaolinite ASP-170 (manufactured by Fuji Talc), Kaolin UW (manufactured by Engelhard Corporation), Talc RF (manufactured by Fuji Talc), etc.

The amount of such inorganic additives is not limited insofar as the transparency of molded articles is not impaired. Usually, the amount is preferably 30 wt.% or smaller, more preferably 20 wt.% or smaller, still more preferably 10 wt.% or smaller, particularly more preferably 5 wt.% or smaller, and most preferably 1 wt.% or smaller, per 100 parts by weight of the lactic acid-based polymer. Furthermore, pigments, stabilizers, antistatic agents, ultraviolet absorbers, antioxidants, flame retardants, mold release agents, lubricants, dyes, bactericidal agents, elastomers, fillers, etc., can be suitably used as other additives according to the purpose and application, insofar as the transparency of molded articles is not impaired.

### Molded Article of the Invention

Articles produced by molding the lactic acid-based polymer composition of the invention as obtained above have good biodegradability, and excellent transparency and crystallinity (heat resistance).

Molding methods are not limited. Various molding methods that are generally used for conventional plastics, such as extrusion molding, injection molding, vacuum molding, pressure forming, etc., can be used.

### <Crystallization>

Methods for crystallizing molded articles during or after molding the lactic acid-based polymer composition include, for example, during molding, (1) introducing the molten lactic acid-based polymer composition into a mold and allows it to crystallize therein, (2) extruding the molten lactic acid-based polymer composition from a T-die extruder and crystallizing it by a chill roll (hereinafter, methods (1) and (2) are referred to as "one-step crystallization methods"), and (3) heat-treating amorphous or partially crystalline molded articles produced by molding the lactic acid-based polymer composition (hereafter referred to as a "two-step crystallization method"). In said one-step crystallization methods and two-step crystallization method, the optimum temperature conditions to be used when crystallizing molded articles are different.

In the one-step crystallization methods, temperature conditions for crystallization are preferably within the temperatures range from the crystallization onset temperature of the lactic acid-based polymer composition (hereinafter referred to as "Tc") to the glass transition temperature thereof (hereinafter referred to as "Tg") as measured by differential scanning calorimetry (hereinafter referred to as "DSC analysis"). At temperatures higher than Tc, the crystallization rate is significantly lowered, resulting in impaired productivity, operability, failure to achieve crystallization; therefore, the desired molded articles may not be obtained. On the other hand, at temperatures lower than Tg, the crystallization rate becomes excessively low, with the result that the desired molded articles may not be produced. In this method, duration time of the crystallization varies depending on the type of the composition and is not limited insofar it is longer than the time required for sufficiently crystallizing the molded articles.

In the two-step crystallization method, temperature conditions to be set for crystallization are preferably in the range from the melting point (hereinafter referred to as "Tm") of the lactic acid-based polymer composition (pellets) to the Tg thereof, more preferably from (Tg + 5°C) to (Tm - 20°C), still more preferably from (Tg + 10°C) to (Tm - 40°C). At temperatures higher than Tm, transparency may be impaired even when the molded articles.are crystallized in a short period of time, or the shape thereof may be distorted. If the molded articles are further heated for a long period of time, they may be melted. On the other hand, at temperatures lower than Tg, the crystallization rate becomes excessively low, and the desired crystalline molded articles may not be produced. In this method, duration time of the heat treatment varies depending on the type of the composition and is not limited insofar it is longer than the time required for sufficiently crystallizing the molded articles.

However, since the molding cycle of the two-step crystallization method is longer than that of the one-step crystallization methods, it may not always be an industrially satisfactory method.

Molded articles having high transparency and crystallinity can be effectively produced from the lactic acid-based polymer composition of the invention not only using the one-step crystallization methods, which can provide superior molding cycle, but also using the two-step crystallization method.

The crystallization mechanism in the present invention is presumed to be as described hereinbelow: As the molten lactic acid-based polymer composition is cooled, the amide compound contained in the lactic acid-based polymer composition functions as crystallization nuclei, and the lactic acid-based polymer is crystallized as small crystals, thereby producing a transparent, highly crystalline molded article, and the amide compound is presumed to serve as a clarifying nucleating agent. It is further presumed that the ester plasticizer has a function of increasing the rate of crystallization, especially the rate of crystallization of the lactic acid-based polymer, thereby shortening the molding cycle of the molded articles.

In this specification, Tg refers to the glass transition onset temperature (Tg) at which the lactic acid-based polymer composition (pellets) turns rubbery, and Tm refers to the peak top temperature of the melting peak (melting point: Tm), as measured by a DSC analysis in which the lactic acid-based polymer composition (pellets) is heated at a rate of 10°C/min. Tc refers to the crystallization onset temperature of a lactic acid-based polymer composition as measured by a DSC analysis in which the melt of the lactic acid-based polymer is cooled at a rate of 10°C/min.

Described hereinbelow are typical methods of producing articles which can simultaneously give transparency and crystallinity to the molded articles.
a) In the case of injection molding, the desired molded article which has both transparency and crystallinity can be obtained according to one-step crystallization method, for example, by introducing a melt of the lactic acid-based polymer composition (pellets) containing an amide compound, an ester plasticizer, and a lactic acid-based polymer into a mold maintained at a temperature between Tc and Tg. Moreover, the desired molded article which has both transparency and crystallinity can be obtained according to two-step crystallization method, for example, by introducing a melt of such pellets into a mold maintained at a temperature lower than Tg, and maintaining the amorphous or partially crystallized molded article thus obtained in an atmosphere having a temperature ranging from Tg to Tm or bringing the moleded article into contact with a heating medium.
b) In the case of extrusion molding, the desired sheet or film which has both transparency and crystallinity can be obtained according to one-step crystallization method, for example, by extruding a melt of such pellets onto a chill roll maintained at a temperature ranging from Tc to Tg by a commonly used T-die extruder, and crystallizing the resulting product on the chill roll. Moreover, amorphous or partially crystallized film or sheet, produced by extruding the pellets by a commonly used T-die extruder onto a chill roll maintained at a temperature lower than Tg, is heat treated in a continuous manner by passing it through an oven (heating furnace) or hot water maintained at a temperature between Tg and Tm, or heat treated in a batch-wise manner. Thereby, the desired film or sheet which has both transparency and crystallinity can also be obtained according to two-step crystallization method.

The lactic acid-based polymer molded article of the invention has excellent transparency. As an indicator of its transparency, a molded article with a thickness of 0.5 mm has a haze of 70% or less, particularly 50% or less, and advantageously 30% or less. In addition to high transparency, the lactic acid-based polymer molded article exhibits high crystallinity. As an indicator of its crystallinity, the molded article preferably has a degree of crystallization of 30% or more, and particularly 40% or more, as measured by an X-ray diffractometer. The production methods described above can readily produce molded articles having a degree of crystallization of 30% or more and, a haze of 70% or less at a thickness of 0.5 mm. Furthermore, when the optimum temperature conditions are selected from the aforementioned molding conditions, it is possible to produce lactic acid-based polymer molded articles having crystallinity (heat resistance) and transparency such that articles with 0.5 mm thickness exhibit a haze of 30% or less.

Thus, the invention also provides a lactic acid-based polymer molded article comprising the aforementioned lactic acid-based polymer composition (i.e., a composition containing the amide compound, ester plasticizer, lactic acid-based polymer, and, if necessary, other additives) and having a degree of crystallinity of 30% or more and having a haze of 70% or less, preferably 50% or less, and more preferably 30% or less, at a thickness of 0.5 mm.

Applications of the transparent, crystalline (heat resistant), biodegradable lactic acid-based polymer molded article of the invention include films, sheets, tapes, labels, laminates, fibers, knittings, textiles, nonwoven fabrics, papers, felts, boards, sticks, bags, tubes, porous molded articles, containers, parts, and other molded articles. Specifically, the molded article of the present invention can be applied to agricultural bags, multifilms, tunnel films, vegetation sheets, vegetation nets, seed strings, covering sheets, plant pots, fishing lines, fishing nets, and like agricultural, horticultural, and fishing materials; tableware containers, food wrapping films, trays, stretch films, shrink films, beverage bottles, and like food packaging materials; heat insulating materials, frameworks, earth retainers, water retention sheets, sandbags, and like civil engineering and construction materials; packaging for paper diapers and sanitary items, and like sanitary materials; food bags, grocery shopping bags, garbage bags, general use bags, sheets, tapes, labels, shampoo bottles, hair conditioner bottles, cosmetic containers, and like miscellaneous everyday items; and packing materials, shock absorbing materials, binding tape, string, housing materials for home electric appliances and office automation appliances, automotive parts, and like industrial materials.

### EXAMPLES

A Production Example, Examples, and Comparative Examples are given below to illustrate the invention in more detail, but the scope of the invention is not limited to these examples. "Parts" in the examples are all by weight. Conditions for measuring the melting point of the amide compounds and the physical properties of the molded articles obtained from the lactic acid-based polymers of the invention are as follows:

### 1) Melting Point of Amide Compounds

The melting point of an amide compound refers to the temperature at which the endothermic peak (peak top) was observed by a differential scanning calorimeter (manufactured by Shimadzu Corporation, DSC-50) when the amide compound was heated at a rate of 10°C/min.

### 2) Transparency (Haze)

Measured in accordance with JIS K-6714 using a Haze Meter manufactured by Toyo Seiki Seisaku-sho Ltd.

### 3) Degree of crystallization

Test pieces obtained from molded articles were analyzed by an X-ray diffractometer (manufactured by Rigaku Corporation, RINT-2100) in the 2θ range of 12-28°. Using the chart thus obtained, the ratio of the area of crystalline peaks to the entire area (total area of crystalline portions and amorphous portions) was calculated.

### 4) Tensile Test

The yield strength and elongation were measure in accordance with JIS K-6723.

### 5) Heat Resistance Test

Test pieces were placed in a gear oven at a temperature of 80°C, the deformation of each test piece after 24 hours was visually observed and evaluated according to the following 3-grades:
○: No deformation observed
Δ: Slight deformation observed
×: Clear deformation observed

### (6) Crystallization Onset Temperature (Tc)

The crystallization onset temperature (Tc) refers to the temperature at which crystallization peak of the lactic acid-based polymer composition (pellets prepared in Examples and Comparative Examples below) was observed by a differential scanning calorimeter (manufactured by Perkin-Elmer Inc., DSC7) when the lactic acid-based polymer composition was melted and then cooled at a rate of 10°C/min.

### (7) Glass Transition Onset Temperature (Tg) and Melting Point (Tm)

The glass transition temperature (Tg) refers to the temperature at which the lactic acid-based polymer compositions (pellets obtained in Examples and Comparative Examples below), when heated at a rate of 10°C/min, turned rubbery, and the melting point (Tm) refers to the peak top temperature, as observed by a differential scanning calorimeter (manufactured by Perkin-Elmer Inc., DSC7).

### Production Example 1

Under a nitrogen atmosphere, 0.03 mol of trimesic acid, 0.099 mol of cyclohexylamine, 0.099 mol of triphenyl phosphite, 10 g of pyridine and 50 g of N-methyl pyrrolidone were introduced into a 0.5 1 flask equipped with a stirrer, a thermometer, a reflux condenser and a nitrogen gas inlet, and the reaction was carried out at 100°C for 4 hours. The reaction mixture was cooled to room temperature and poured into 500 ml of 1:1 isopropyl alcohol/water mixture for reprecipitation. Filtration of the precipitate and drying gave the desired trimesic acid tricyclohexylamide. According to FT-IR analysis, the carboxyl group absorption peak disappeared and the amide group absorption peak (1633 cm⁻¹) was observed, confirming the production of trimesic acid tricyclohexylamide.
Melting point : 384°C.

### Examples 1-23

An amide compound and an ester plasticizer shown in Table 1 and used in amounts specified therein were blended with 100 parts by weight of a polylactic acid (weight average molecular weight: 180000, L-lactic acid/D-lactic acid = 97/3, manufactured by Shimadzu Corporation, trade name: "LACTY") and the resulting mixture was kneaded at 200°C with an extruder with a cylinder inner diameter of 20 mm (ratio of length/diameter = 19, manufactured by Toyo Seiki Seisaku-sho Ltd., trade name: "Laboplastomill"). The resin composition extruded by nitrogen purging was cooled by water and pelletized with a pelletizer. The pellets thus obtained were vacuum-dried for 24 hours at 50°C before being subjected to molding.

The dried pellets were placed in a press set at 200 °C and melted for 2 minutes, and the melt was pressed under a pressure of 100 kgf/cm² at 200°C for 5 minutes, and then crystallized under the conditions described in Table 1, thereby producing a sheet with a thickness of 0.5 mm according to one-step crystallization method.

A test piece (thickness: 0.5 mm) was cut from the sheet thus obtained. The transparency (haze), degree of crystallization, tensile strength, and heat resistance of the test piece were measured. Results are shown in Tables 1 and 2.

### Comparative Examples 1-5

Pellets were prepared in the same manner as in Example 1 except that no amide compounds were used. The pellets thus prepared were dried and molded as in Example, and crystallized under the conditions described in Table 2, giving a sheet with a thickness of 0.5 mm. Table 2 shows the results of measuring physical properties of the thus-obtained sheet.

### Comparative Examples 6 and 7

Pellets were prepared in the same manner as in Example 1 except that no ester plasticizers were used. The pellets thus prepared were dried and molded as in Example, and crystallized under the conditions described in Table 2, giving a sheet with a thickness of 0.5 mm. Table 2 shows the results of measuring physical properties of the thus-obtained sheet.

### Comparative Examples 8 and 9

Pellets were prepared in the same manner as in Example 1 except that neither amide compounds nor ester plasticizers were added. The pellets thus prepared were dried and molded as in Example, and crystallized under the conditions described in Table 2, giving a sheet with a thickness of 0.5 mm. Table 2 shows the results of measuring physical properties of the thus-obtained sheet.

### Examples 24-26

An amide compound and an ester plasticizer shown in Table 3 and used in amounts specified therein were blended with 100 parts by weight of a polylactic acid (weight average molecular weight: 180000, L-lactic acid/D-lactic acid = 97/3, manufactured by Shimadzu Corporation, trade name: "LACTY") and kneaded at 200°C with an extruder with a cylinder inner diameter of 20 mm (length/diameter: 19, manufactured by Toyo Seiki Seisaku-sho, Ltd., trade name: "Laboplastomill"). The resin composition extruded by nitrogen purging was cooled by water and pelletized with a pelletizer. The pellets thus obtained were vacuum-dried for 24 hours at 50°C before being subjected to molding.

The dried pellets were molded with an injection molding machine (clamping pressure: 40 ton, manufactured by Nissei Plastic Industrial Co., Ltd.) at a barrel temperature of 160-200°C, injection time of 10 seconds, and mold temperature and cooling time as shown in Table 3, thereby giving a business card-sized plate having 1 mm and 0.5 mm thickness portions.

The transparency (haze) and degree of crystallization of the plate thus produced were measured, and the results are shown in Table 3.

### Comparative Examples 10 and 11

Pellets were prepared in the same manner as in Example 24 except that no amide compounds were used. The pellets thus prepared were dried and molded as in Example under the conditions as described in Table 3, giving a plate having the same size as that of the plate prepared in said Example. Table 3 shows the results of measuring the physical properties of the thus-obtained plate.

### Comparative Examples 12 and 13

Pellets were prepared in the same manner as in Example 24 except that no ester plasticizers were used. The pellets thus prepared were dried and molded as in Example under the conditions as described in Table 3, giving a plate having the same size as that of the plate prepared in Example. Table 3 shows the results of measuring the physical properties of the thus-obtained plate.

### Comparative Examples 14 and 15

Pellets were prepared in the same manner as in Example 24 except that neither amide compounds nor ester plasticizers were used. The pellets thus prepared were dried and molded as in Example under the conditions as described in Table 3, giving a plate having the same size as that of the plate prepared in Example. Table 3 shows the results of measuring the physical properties of the thus-obtained plate.

In Tables 1-3, the letters a to h indicate the type of the amide compounds, and the letters A to K indicate the type of the ester plasticizers.

### 1) Amide Compounds

a: Trimesic acid tricyclohexylamide (melting point: 384°C)
b: Trimesic acid tri(4-methylcyclohexylamide) (melting point: 366°C)
c: Trimesic acid tri(tert-butylamide) (melting point: 368°C)
d: 1,4-cyclohexane dicarboxylic acid di(2-methylcyclohexylamide) (melting point: 363°C)
e: 1,2,3,4-butanetetracarboxylic acid tetracyclohexylamide (melting point: 381°C)
f: 2,6-naphthalene acid dicarboxylic acid dicyclohexylamide (melting point: 385°C)
g: 1,4-cyclohexane dicarboxylic acid dibenzylamide (melting point: 310°C)
h: 1,2,3,4-butanetetracarboxylic acid tetraanilide (melting point: 331°C)

### 2) Ester plasticizers

A: Glycerol triacetate
B: Tributyl acetylcitrate
C: Tri(2-ethylhexyl) citrate
D: Triethylene glycol di(2-ethylhexanoate)
E: Diethylene glycol dibenzoate
F: Polyethylene glycol (with a number average molecular weight of 300) di(2-ethylhexanoate)
G: Polyethylene glycol (with a number average molecular weight of 200) dibenzoate
H: Tripropylene glycol di(2-ethylhexanoate)
I: Dipropylene glycol dibenzoate
J: Polypropylene glycol (with a number average molecular weight of 400) di(2-ethylhexanoate)
K: Polypropylene glycol (with a number average molecular weight of 400) dibenzoate

**Table 1**

| | | Example | | | | | | | | | | | | | | | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 |
| Amide Compound | Type | a | a | a | a | a | a | b | c | d | e | f | g | h | a | a | a | a | a |
| | Amount added (parts) | 0.5 | 0.5 | 0.5 | 0.1 | 0.3 | 1,0 | 0.5 | 0.5 | 0.5 | 0.5 | 0.5 | 0.5 | 0.5 | 0.5 | 0.5 | 0.5 | 0.5 | 0.5 |
| Ester plasticizer | Type | G | G | G | G | G | G | G | G | G | G | G | G | G | A | B | C | D | E |
| | Amount added (parts) | 25 | 20 | 30 | 25 | 25 | 25 | 25 | 25 | 25 | 25 | 25 | 25 | 25 | 25 | 25 | 25 | 25 | 25 |
| Pellet | Tc (°C) | 118 | 119 | 116 | 99 | 118 | 116 | 108 | 102 | 106 | 102 | 97 | 109 | 127 | 115 | 116 | 117 | 118 | 117 |
| Properties | Tg (°C) | 25 | 31 | 20 | 26 | 26 | 24 | 26 | 27 | 27 | 26 | 28 | 25 | 25 | 29 | 32 | 31 | 28 | 29 |
| | Tm (°C) | 157 | 159 | 154 | 157 | 157 | 156 | 157 | 157 | 157 | 157 | 157 | 156 | 157 | 158 | 159 | 158 | 157 | 157 |
| Crystallization conditions | Temp (°C) | 60 | 60 | 60 | 60 | 60 | 60 | 60 | 60 | 60 | 60 | 60 | 60 | 60 | 60 | 60 | 60 | 60 | 60 |
| | Time (min) | 2 | 2 | 2 | 2 | 2 | 2 | 2 | 2 | 2 | 2 | 2 | 2 | 2 | 2 | 2 | 2 | 2 | 2 |
| Physical properties of molded article | | | | | | | | | | | | | | | | | | | |
| Haze (%/0.5 mm) | | 23 | 16 | 27 | 20 | 21 | 25 | 23 | 20 | 22 | 22 | 28 | 24 | 25 | 15 | 17 | 16 | 19 | 18 |
| Degree of Crystallization (%) | | 40.5 | 34.8 | 45.9 | 38.5 | 39.4 | 42.1 | 40.7 | 36.2 | 38.5 | 39.8 | 40.3 | 38.6 | 37.5 | 32.3 | 34.5 | 33.8 | 36.0 | 35.6 |
| Tensile test | | | | | | | | | | | | | | | | | | | |
| Yield strength (MPa) | | 10.1 | 27.6 | 18.5 | 19.9 | 20.3 | 21.6 | 20.8 | 19.4 | 20.0 | 20.4 | 20.6 | 19.9 | 19.2 | 22.1 | 22.3 | 22.1 | 21.9 | 21.7 |
| Elongation (%) | | 340 | 320 | 430 | 420 | 418 | 395 | 410 | 420 | 416 | 415 | 415 | 410 | 405 | 373 | 375 | 370 | 380 | 382 |
| Heat resistance | | o | o | o | o | o | o | o | o | o | o | o | o | o | o | o | o | o | o |

**Table 2**

| | | Example | | | | | Comparative Example | | | | | | | | |
|---|---|---|---|---|---|---|---|---|---|---|---|---|---|---|---|
| | | 19 | 20 | 21 | 22 | 23 | 1 | 2 | 3 | 4 | 5 | 6 | 7 | 8 | 9 |
| Amide compound | Type | a | a | a | a | a | - | - | - | - | - | a | a | - | - |
| | Amount added (parts) | 0.5 | 0.5 | 0.5 | 0.5 | 0.5 | 0 | 0 | 0 | 0 | 0 | 0.5 | 0.5 | 0 | 0 |
| Ester plasticizer | Type | F | H | I | J | K | G | G | B | E | I | - | - | - | - |
| | Amount added (parts) | 25 | 25 | 25 | 25 | 25 | 25 | 25 | 25 | 25 | 25 | 0 | 0 | 0 | 0 |
| Pellet | T_{c} (°C) | 117 | 117 | 118 | 117 | 116 | 101 | 101 | 104 | 98 | 100 | 129 | 129 | 105 | 105 |
| Properties | T_{g} (°C) | 24 | 29 | 30 | 33 | 35 | 27 | 27 | 32 | 30 | 31 | 54 | 54 | 59 | 59 |
| | Tₘ (°C) | 157 | 157 | 157 | 157 | 158 | 157 | 157 | 159 | 157 | 157 | 168 | 168 | 168 | 168 |
| Crystallization | Temp (°C) | 60 | 60 | 60 | 60 | 60 | 60 | 100 | 60 | 60 | 60 | 60 | 100 | 60 | 100 |
| conditions | Time (min) | 2 | 2 | 2 | 2 | 2 | 2 | 2 | 2 | 2 | 2 | 2 | 2 | 2 | 2 |
| Physical properties of molded article | | | | | | | | | | | | | | | |
| Haze (%/0.5 mm) | | 24 | 17 | 16 | 15 | 16 | 14 | 87 | 13 | 13 | 12 | 7 | 85 | 6 | 12 |
| Degree of Crystallization (%) | | 41.3 | 35.1 | 34.0 | 32.9 | 33.1 | 22.0 | 41.2 | 18.3 | 18.5 | 15.1 | 6.1 | 34.6 | 5.0 | 9.8 |
| Tensile test | | | | | | | | | | | | | | | |
| Yield strength (MPa) | | 20.5 | 23.0 | 22.8 | 22.7 | 22.8 | 10.0 | 21.4 | 12.0 | 10.1 | 10.4 | 60.5 | 61.8 | 57.9 | 58.3 |
| Elongation (%) | | 420 | 365 | 361 | 363 | 360 | 335 | 290 | 292 | 320 | 309 | 5 | 4 | 5 | 4 |
| Heat resistance | | o | o | o | o | o | Δ | o | x | x | x | x | o | x | x |

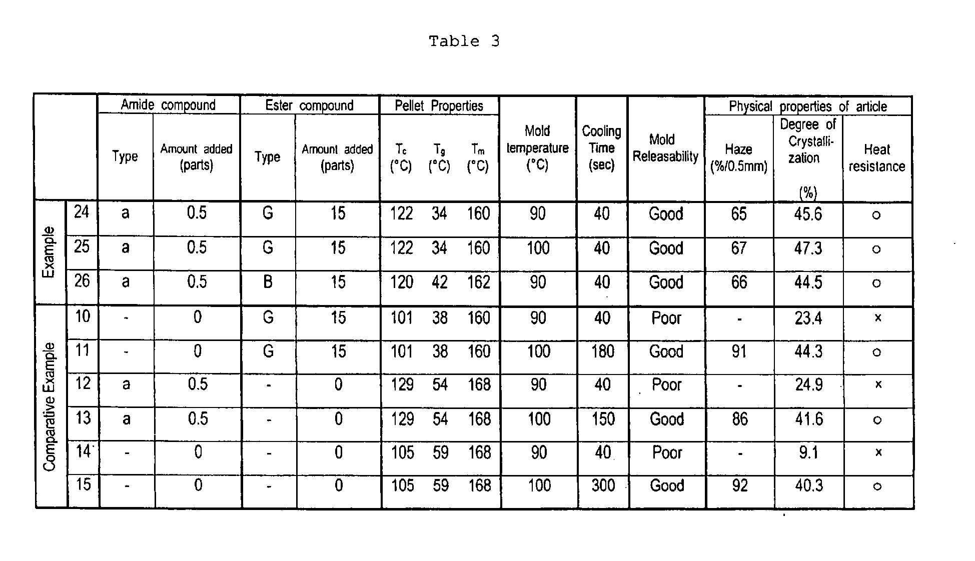

Regarding Table 3, 40 seconds of cooling in Comparative Examples 10, 12 and 14 hardly crystallized the molded articles and the molded articles were soft and difficult to be released from the mold, and deformed upon release, and therefore it was impossible to obtain a molded article with respect to which the haze value could be accurately measured. In Comparative Examples 11, 13 and 15, it was necessary to carry out cooling for as long as 150-300 seconds in order to impart good mold releasability and heat resistance to the molded articles. The transparency thereof was poor.

### INDUSTRIAL APPLICABILITY

According to the present invention, a transparent, crystalline (heat resistant) molded article comprising a lactic acid-based polymer can be provided. According to the present invention, transparency and crystallinity can be simultaneously given to an article comprising a lactic acid-based polymer.

Furthermore, the method for producing a lactic acid-based polymer article of the invention can increase the rate of crystallization during the crystallization step, and thereby the molding cycle can be shortened.

In addition, when a lactic acid-based polymer molded article is produced using the lactic acid-based polymer composition of the present invention, such a molded article exhibits excellent mold releasability.

## Claims

1. A lactic acid-based polymer composition comprising:
(i) at least one amide compound represented by General Formula (1):
R¹(̵CONHR²)ₐ (1)
wherein R¹ represents a C₂₋₃₀ saturated or unsaturated aliphatic polycarboxylic acid residue, a C₄₋₂₈ saturated or unsaturated alicyclic polycarboxylic acid residue, or a C₆₋₂₈ aromatic polycarboxylic acid residue;
R² represents C₁₋₁₈ alkyl, C₂₋₁₈ alkenyl, C₃₋₁₂ cycloalkyl or cycloalkenyl, phenyl, naphthyl, anthryl, or a group represented by General Formula (a), General Formula (b), General Formula (c), or General Formula (d): 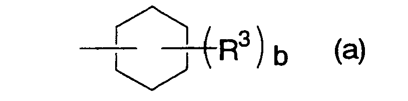 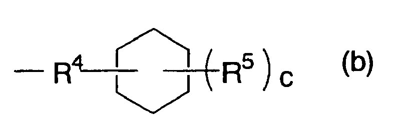 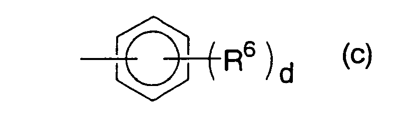 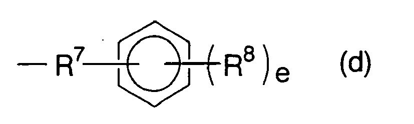 wherein R³ is C₁₋₁₈ alkyl, C₂₋₁₈ alkenyl, C₁₋₁₈ alkoxy, C₃₋₁₈ cycloalkyl, phenyl, or halogen; R⁴ represents C₁₋₄ linear or branched alkylene; R⁵ and R⁶ have the same meaning as R³; R⁷ has the same meaning as R⁴; R⁸ has the same meaning as R³;
a is an integer of 2 to 6; b is an integer of 1 to 5; c is an integer of 0 to 5; d is an integer of 1 to 5; and e is an integer of 0 to 5,
(ii) at least one ester plasticizer; and
(iii) a lactic acid-based polymer.

2. A lactic acid-based polymer composition according to Claim 1, wherein R¹ is 1,4-cyclohexanedicarboxylic acid residue, 2,6-naphthalenedicarboxylic acid residue, trimesic acid residue or 1,2,3,4-butanetetracarboxylic acid residue.

3. A lactic acid-based polymer composition according to Claim 2, wherein R¹ is trimesic acid residue.

4. A lactic acid-based polymer composition according to Claim 2, wherein R² is a tert-butyl, cyclohexyl, phenyl, 2-methylcyclohexyl, 4-methylcyclohexyl or benzyl.

5. A lactic acid-based polymer composition according to Claim 4, wherein the amide compound is at least one member selected from the group consisting of trimesic acid tricyclohexylamide, trimesic acid tri(2-methylcyclohexylamide), trimesic acid tri(4-methylcyclohexylamide), 1,4-cyclohexane dicarboxylic acid dicyclohexylamide, 1,4-cyclohexane dicarboxylic acid di(2-methylcyclohexylamide), 1,4-cyclohexane dicarboxylic acid dibenzylamide, 2,6-naphthalenedicarboxylic acid dicyclohexylamide, 1,2,3,4-butanetetracarboxylic acid tetracyclohexylamide and 1,2,3,4-butanetetracarboxylic acid tetraanilide.

6. A lactic acid-based polymer composition according to Claim 1, wherein the ester plasticizer is at least one member selected from the group consisting of polyhydric alcohol derivatives, hydroxycarboxylic acid derivatives, aliphatic or aromatic carboxylic acid esters, polyether polyol derivatives and phosphoric acid derivatives.

7. A lactic acid-based polymer composition according to Claim 6, wherein the ester plasticizer is at least one member selected from the group consisting of glycerol derivatives, citric acid derivatives and polyalkyleneglycol derivatives.

8. A lactic acid-based polymer composition according to Claim 7, wherein the glycerol derivatives are at least one glycerol tri-C₂₋₁₈-aliphatic carboxylic acid ester.

9. A lactic acid-based polymer composition according to Claim 7, wherein the citric acid derivatives are at least one member selected from the group consisting of acetyl citric acid tri-C₁₋₁₈-alkyl esters and citric acid tri-C₁₋₁₈-alkyl esters.

10. A lactic acid-based polymer composition according to Claim 7, wherein the polyalkyleneglycol derivatives are at least one member selected from the group consisting of diethylene glycol di-C₂₋₁₈-aliphatic carboxylic acid esters, triethylene glycol di-C₂₋₁₈-aliphatic carboxylic acid esters, tetraethylene glycol di-C₂₋₁₈-aliphatic carboxylic acid esters, polyethylene glycol di-C₂₋₁₈-aliphatic carboxylic acid esters, diethylene glycol di-aromatic carboxylic acid esters, triethylene glycol di-aromatic carboxylic acid esters, tetraethylene glycol di-aromatic carboxylic acid esters, polyethylene glycol di-aromatic carboxylic acid esters, dipropylene glycol di-C₂₋₁₈-aliphatic carboxylic acid esters, tripropylene glycol di-C₂₋₁₈-aliphatic carboxylic acid esters, tetrapropylene glycol di-C₂₋₁₈-aliphatic carboxylic acid esters, polypropylene glycol di-C₂₋₁₈-aliphatic carboxylic acid esters, dipropylene glycol di-aromatic carboxylic acid esters, tripropylene glycol di-aromatic carboxylic acid esters, tetrapropylene glycol di-aromatic carboxylic acid esters, and polypropylene glycol di-aromatic carboxylic acid esters.

11. A lactic acid-based polymer composition according to Claim 1, wherein the lactic acid-based polymer has a weight average molecular weight of 50000 or more.

12. A lactic acid-based polymer composition according to Claim 1 which comprises 0.01-10 parts by weight of the amide compound and 1-300 parts by weight of the ester plasticizer, per 100 parts by weight of lactic acid-based polymer.

13. A molded article produced by molding the lactic acid-based polymer composition according to any one of Claims 1-12.

14. A molded article according to Claim 13, the molded article having a degree of crystallization of 30% or more as measured by an X-ray diffractometer in the 2θ range of 12-28° and a transparency such that haze is 70% or less at a thickness of 0.5 mm, as measured in accordance with JIS K-6714.

15. A method for producing the lactic acid-based polymer molded article according to Claim 14, the method comprising: .
(1) Providing the lactic acid-based polymer composition in the form of pellets, introducing a melt of the pellets into a mold and crystallizing the melt in the mold; or
(2) Providing the lactic acid-based polymer composition in the form of pellets, extruding a melt of the pellets from a T-die extruder and crystallizing the melt by a chill roll;
the melt being crystallized at a temperature within the range from Tc to Tg, wherein Tc is the crystallization onset temperature of the lactic acid-based polymer composition and Tg is the glass transition temperature of the lactic acid-based polymer composition, as measured by differential scanning calorimetry.

## Patentansprüche

1. Polymerzusammensetzung auf Milchsäurebasis umfassend:
(i) mindestens eine durch die allgemeine Formel (1) dargestellte Amidverbindung:
R¹(̵CONHR²)ₐ (1)
worin R¹ einen gesättigten oder ungesättigten aliphatischen C₂₋₃₀-Polycarbonsäurerest, einen gesättigten oder ungesättigten alicyclischen C₄₋₂₈-Polycarbonsäurerest oder einen aromatischen C₆₋₂₈-Polycarbonsäurerest darstellt;
R² C₁₋₁₈-Alkyl, C₂₋₁₈-Alkenyl, C₃₋₁₂-Cycloalkyl oder -cycloalkenyl, Phenyl, Naphthyl, Anthryl oder eine durch die allgemeine Formel (a), die allgemeine Formel (b), die allgemeine Formel (c) oder die allgemeine Formel (d) darstellte Gruppe darstellt; 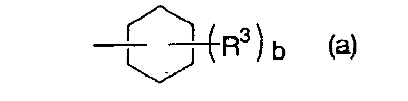 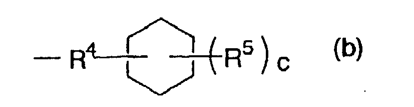 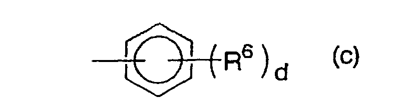 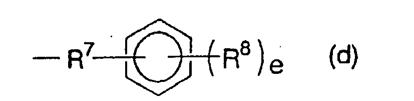 worin R³ C₁₋₁₈-Alkyl, C₂₋₁₈-Alkenyl, C₁₋₁₈-Alkoxy, C₃₋₁₈-Cycloalkyl, Phenyl, oder Halogen ist; R⁴ lineares oder verzweigtes C₁₋₄-Alkylen ist; R⁵ und R⁶ die gleiche Bedeutung wie R³ haben; R⁷ die gleiche Bedeutung wie R⁴ hat; R⁸ die gleiche Bedeutung wie R³ hat;
a eine ganze Zahl von 2 bis 6 ist; b eine ganze Zahl von 1 bis 5 ist; c eine ganze Zahl von 0 bis 5 ist; d eine ganze Zahl von 1 bis 5 ist; und e eine ganze Zahl von 0 bis 5 ist;
(ii) mindestens einen Ester-Weichmacher; und
(iii) ein Polymer auf Milchsäurebasis.

2. Polymerzusammensetzung auf Milchsäurebasis nach Anspruch 1, worin R¹ ein 1,4-Cyclohexandicarbonsäurerest, ein 2,6-Naphthalindicarbonsäurerest, ein Trimesinsäurerest oder ein 1,2,3,4-Butantetracarbonsäurerest ist.

3. Polymerzusammensetzung auf Milchsäurebasis nach Anspruch 2, worin R¹ ein Trimesinsäurerest ist.

4. Polymerzusammensetzung auf Milchsäurebasis nach Anspruch 2, worin R² tert.-Butyl, Cyclohexyl, Phenyl, 2-Methylcyclohexyl, 4-Methylcyclohexyl oder Benzyl ist.

5. Polymerzusammensetzung auf Milchsäurebasis nach Anspruch 4, worin die Amidverbindung mindestens ein Element ausgewählt aus der Gruppe bestehend aus Trimesinsäuretricyclohexylamid, Trimesinsäuretri(2-methylcyclohexylamid), Trimesinsäuretri(4-methylcyclohexylamid), 1,4-Cyclohexandicarbonsäuredicyclohexylamid, 1,4-Cyclohexandicarbonsäuredi(2-methylcyclohexylamid), 1,4-Cyclohexandicarbonsäuredibenzylamid, 2,6-Naphthalindicarbonsäuredicyclohexylamid, 1,2,3,4-Butantetracarbonsäuretetracyclohexylamid und 1,2,3,4-Butantetracarbonsäuretetraanilid ist.

6. Polymerzusammensetzung auf Milchsäurebasis nach Anspruch 1, worin der Ester-Weichmacher mindestens ein Element ausgewählt aus der Gruppe bestehend aus mehrwertigen Alkoholderivaten, Hydroxycarbonsäurederivaten, aliphatischen oder aromatischen Carbonsäureestern, Polyetherpolyolderivaten und Phosphorsäurederivaten ist.

7. Polymerzusammensetzung auf Milchsäurebasis nach Anspruch 6, worin der Ester-Weichmacher mindestens ein Element ausgewählt aus der Gruppe bestehend aus Glycerinderivaten, Citronensäurederivaten und Polyalkylenglycolderivaten ist.

8. Polymerzusammensetzung auf Milchsäurebasis nach Anspruch 7, worin die Glycerinderivate mindestens ein Glycerintri-C₂₋₁₈-aliphatischer carbonsäureester sind.

9. Polymerzusammensetzung auf Milchsäurebasis nach Anspruch 7, worin die Citronensäurederivate mindestens ein Element ausgewählt aus der Gruppe bestehend aus AcetylCitronensäuretri-C₁₋₁₈-alkylestern und Citronensäuretri-C₁₋₁₈-alkylestern sind.

10. Polymerzusammensetzung auf Milchsäurebasis nach Anspruch 7, worin die Polyalkylenglycolderivate mindestens ein Element ausgewählt aus der Gruppe bestehend aus Diethylenglycol-di-C₂₋₁₈-aliphatischen-carbonsäureestern, Triethylenglycol-di-C₂-₁₈-aliphatischen-carbonsäureestern, Tetraethylenglycol-di-C₂₋₁₈-aliphatischen-carbonsäureestern, Polyethylenglycol-di-C₂₋₁₈₋aliphatischen-carbonsäureestern, Diethylenglycol-di-aromatischen-carbonsäureestern, Triethylenglycol-di-aromatischen-carbonsäureestern, Tetraethylenglycol-di-aromatischen-carbonsäureestern, Polyethylenglycol-di-aromatischen-carbonsäureestern, Dipropylenglycol-di-C₂₋₁₈-aliphatischencarbonsäureestern, Tripropylenglycol-di-C₂₋₁₈-aliphatischen-carbonsäureestern, Tetrapropylenglycol-di-C₂₋₁₈-aliphatischen-carbonsäureestern, Polypropylenglycol-di-C₂₋₁₈-aliphatischen-carbonsäureestem, Dipropylenglycol-di-aromatischen-carbonsäureestern, Tripropylenglycol-di-aromatischen-carbonsäureestern, Tetrapropylenglycol-di-aromatischen-carbonsäureestern und Polypropylenglycol-di-aromatischen-carbonsäureestern.

11. Polymerzusammensetzung auf Milchsäurebasis nach Anspruch 1, worin das Polymer auf Milchsäurebasis ein Gewichtsmittel des Molekulargewichts von 50.000 oder mehr hat.

12. Polymerzusammensetzung auf Milchsäurebasis nach Anspruch 1, welche 0,01 bis 10 Gew.-Teile der Amidverbindung und 1 bis 300 Gew.-Teile des Ester-Weichmachers pro 100 Gew.-Teilen des Polymers auf Milchsäurebasis umfasst.

13. Formkörper, hergestellt durch Formen der Polymerzusammensetzung auf Milchsäurebasis nach irgendeinem der Ansprüche 1 bis 12.

14. Formkörper nach Anspruch 13, wobei der Formkörper einen Kristallisationsgrad von 30% oder mehr, gemessen mit einem Röntgendiffraktometer im 2θ-Bereich von 12 bis 28°, und eine Transparenz entsprechend einer Trübung von 70% oder weniger bei einer Dicke von 0,5 mm, gemessen gemäß JIS K-6714, aufweist.

15. Verfahren zur Herstellung des Formkörpers aus dem Polymer auf Milchsäurebasis nach Anspruch 14, wobei das Verfahren umfasst:
(1) Bereitstellen der Polymerzusammensetzung auf Milchsäurebasis in Form von Pellets, Einfüllen der Schmelze aus den Pellets in ein Formwerkzeug und Kristallisieren der Schmelze im Formwerkzeug; oder
(2) Bereitstellen der Polymerzusammensetzung auf Milchsäurebasis in Form von Pellets, Extrudieren der Schmelze aus den Pellets aus einem Extruder mit T-Düse und Kristallisieren der Schmelze mit einer Kühlwalze;
wobei die Schmelze bei einer Temperatur im Bereich von Tc bis Tg kristallisiert wird, wobei Tc die Temperatur des Kristallisationsbeginns der Polymerzusammensetzung auf Milchsäurebasis und Tg die Glasübergangstemperatur der Polymerzusammensetzung auf Milchsäurebasis gemessen mit einem Differentialscanningkalorimeter ist.

## Revendications

1. Composition de polymère à base d'acide lactique, comprenant : (i) au moins un composé amide représenté par la formule générale (1) :
R¹(̵CONHR²)ₐ (1)
dans laquelle R¹ représente un résidu acide polycarboxylique aliphatique en C₂ à C₃₀ saturé ou insaturé, un résidu acide polycarboxylique alicyclique en C₄ à C₂₈ saturé ou insaturé ou un résidu acide polycarboxylique aromatique en C₆ à C₂₈ ;
R² représente un alkyle en C₁ à C₁₈, un alcényle en C₂ à C₁₈, un cycloalkyle ou cycloalcényle en C₃ à C₁₂, le phényle, le naphtyle, l'anthryle ou un groupe représenté par la formule générale (a), la formule générale (b), la formule générale (c) ou la formule générale (d) : 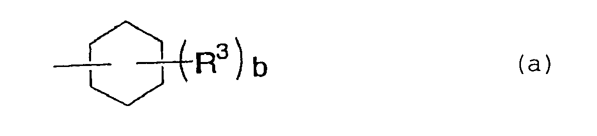 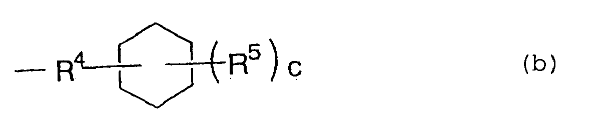 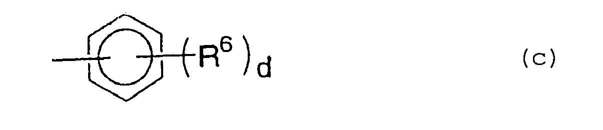 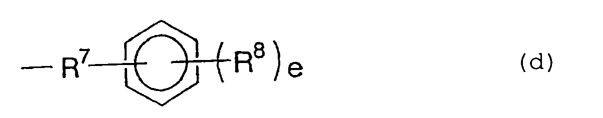 dans lesquelles R³ est un alkyle en C₁ à C₁₈, un alcényle en C₂ à C₁₈, un alcoxy en C₁ à C₁₈, un cycloalkyle en C₃ à C₁₈, le phényle ou un halogène ; R⁴ représente un alkylène en C₁ à C₄ linéaire ou ramifié ; R⁵ et R⁶ ont la même signification que R³ ; R⁷ a la même signification que R⁴ ; R⁸ a la même signification que R³ ;
a est un nombre entier valant de 2 à 6 ; b est un nombre entier valant de 1 à 5 ; c est un nombre entier valant de 0 à 5 ; d est un nombre entier valant de 1 à 5 ; et e est un nombre entier valant de 0 à 5,
(ii) au moins un agent plastifiant à base d'ester ; et
(iii) un polymère à base d'acide lactique.

2. Composition de polymère à base d'acide lactique selon la revendication 1, dans laquelle R¹ est un résidu acide 1,4-cyclohexanedicarboxylique, un résidu acide 2,6-naphtalènedicarboxylique, un résidu acide trimésique ou un résidu acide 1,2,3,4-butanetétracarboxylique.

3. Composition de polymère à base d'acide lactique selon la revendication 2, dans laquelle R¹ est un résidu acide trimésique.

4. Composition de polymère à base d'acide lactique selon la revendication 2, dans laquelle R² est un tert-butyle, cyclohexyle, phényle, 2-méthylcyclohexyle, 4-méthylcyclohexyle ou benzyle.

5. Composition de polymère à base d'acide lactique selon la revendication 4, dans laquelle le composé amide est au moins un élément choisi dans le groupe constitué par le tricyclohexylamide d'acide trimésique, le tri(2-méthylcyclohexylamide) d'acide trimésique, le tri(4-méthylcyclohexylamide) d'acide trimésique, le dicyclohexylamide d'acide 1,4-cyclohexanedicarboxylique, le di(2-méthylcyclohexylamide) d'acide 1,4-cyclohexanedicarboxylique, le dibenzylamide d'acide 1,4-cyclohexanedicarboxylique, le dicyclohexylamide d'acide 2,6-naphtalènedicarboxylique, le tétracyclohexylamide d'acide 1,2,3,4-butanetétracarboxylique et le tétraanilide d'acide 1,2,3,4-butanetétracarboxylique.

6. Composition de polymère à base d'acide lactique selon la revendication 1, dans laquelle l'agent plastifiant à base d'ester est au moins un élément choisi dans le groupe constitué par des dérivés d'alcools polyhydriques, des dérivés d'acides hydroxycarboxyliques, des esters d'acides carboxyliques aliphatiques ou aromatiques, des dérivés de polyéther polyols et des dérivés de l'acide phosphorique.

7. Composition de polymère à base d'acide lactique selon la revendication 6, dans laquelle l'agent plastifiant à base d'ester est au moins un élément choisi dans le groupe constitué par des dérivés de glycérol, des dérivés de l'acide citrique et des dérivés de polyalkylène glycol.

8. Composition de polymère à base d'acide lactique selon la revendication 7, dans laquelle les dérivés de glycérol sont au moins un ester de glycérol d'acide tricarboxylique en C₂ à C₁₈ aliphatique.

9. Composition de polymère à base d'acide lactique selon la revendication 7, dans laquelle les dérivés de l'acide citrique sont au moins un élément choisi dans le groupe constitué par des esters de l'acide acétylcitrique avec des trialkyles en C₁ à C₁₈ et des esters de l'acide citrique avec des trialkyles en C₁ à C₁₈.

10. Composition de polymère à base d'acide lactique selon la revendication 7, dans laquelle les dérivés de polyalkylèneglycol sont au moins un élément choisi dans le groupe constitué par des esters d'acides dicarboxyliques en C₂ à C₁₈ aliphatiques avec le diéthylène glycol, des esters d'acides dicarboxyliques en C₂ à C₁₈ aliphatiques avec le triéthylène glycol, des esters d'acides dicarboxyliques en C₂ à C₁₈ aliphatiques avec le tétraéthylène glycol, des esters d'acides dicarboxyliques en C₂ à C₁₈ aliphatiques avec le polyéthylène glycol, des esters d'acides dicarboxyliques en C₂ à C₁₈ aromatiques avec le diéthylène glycol, des esters d'acides dicarboxyliques en C₂ à C₁₈ aromatiques avec le triéthylène glycol, des esters d'acides dicarboxyliques en C₂ à C₁₈ aromatiques avec le tétraéthylène glycol, des esters d'acides dicarboxyliques en C₂ à C₁₈ aromatiques avec le polyéthylène glycol, des esters d'acides dicarboxyliques en C₂ à C₁₈ aliphatiques avec le dipropylène glycol, des esters d'acides dicarboxyliques en C₂ à C₁₈ aliphatiques avec le tripropylène glycol, des esters d'acides dicarboxyliques en C₂ à C₁₈ aliphatiques avec le tétrapropylène glycol, des esters d'acides dicarboxyliques en C₂ à C₁₈ aliphatiques avec le polypropylène glycol, des esters d'acides dicarboxyliques en C₂ à C₁₈ aromatiques avec le dipropylène glycol, des esters d'acides dicarboxyliques en C₂ à C₁₈ aromatiques avec le tripropylène glycol, des esters d'acides dicarboxyliques en C₂ à C₁₈ aromatiques avec le tétrapropylène glycol et des esters d'acides dicarboxyliques en C₂ à C₁₈ aromatiques avec le polypropylène glycol.

11. Composition de polymère à base d'acide lactique selon la revendication 1, dans laquelle le polymère à base d'acide lactique a une masse moléculaire moyenne en poids de 50 000 ou plus.

12. Composition de polymère à base d'acide lactique selon la revendication 1, qui comprend de 0,01 à 10 parties en poids du composé amide et de 1 à 300 parties en poids de l'agent plastifiant à base d'ester pour 100 parties en poids du polymère à base d'acide lactique.

13. Article moulé produit en moulant la composition de polymère à base d'acide lactique selon l'une quelconque des revendications 1 à 12.

14. Article moulé selon la revendication 13, ledit article moulé ayant un degré de cristallisation de 30% ou plus, mesuré par diffractométrie des rayons X dans la plage 2 θ de 12 à 28°, et une transparence telle que le voile est de 70% ou moins à une épaisseur de 0,5 mm, mesuré suivant JIS K-6714.

15. Procédé de production de l'article moulé en polymère à base d'acide lactique selon la revendication 14, le procédé comprenant les étapes consistant à :
(1) Obtenir la composition de polymère à base d'acide lactique sous la forme de granulés, introduire une fusion des granulés dans un moule et cristalliser la fusion dans le moule ; ou
(2) Obtenir la composition de polymère à base d'acide lactique sous la forme de granulés, extruder une fusion des granulés à partir d'une extrudeuse à filière plate et cristalliser la fusion au moyen d'un cylindre refroidisseur ;
la fusion étant cristallisée à une température dans la plage de Tc à Tg, où Tc est la température de début de cristallisation de la composition de polymère à base d'acide lactique et Tg est la température de transition vitreuse de la composition de polymère à base d'acide lactique, mesurée par calorimétrie différentielle.
